# EUROPÄISCHE PATENTSCHRIFT

(11) **EP 2 222 509 B1**
(45) Veröffentlichungstag und Bekanntmachung des Hinweises auf die Patenterteilung: **22.03.2017**
(21) Anmeldenummer: 08859330.6
(22) Anmeldetag: 10.12.2008
(51) Int. Cl.: B60R 16/023, B60R 16/03, B60W 20/00, G06F 13/40, H04L 12/46

(54) **VERFAHREN UND STEUERSYSTEM ZUM ÜBERTRAGEN VON DATEN ZWISCHEN STEUERVORRICHTUNGEN IN EINEM FAHRZEUG**
METHOD FOR TRANSMITTING DATA BETWEEN CONTROL DEVICES IN A VEHICLE
PROCÉDÉ DE TRANSMISSION DE DONNÉES ENTRE DES DISPOSITIFS DE COMMANDE DANS UN VÉHICULE

(30) Priorität: 10.12.2007 DE 102007059438
(43) Veröffentlichungstag der Anmeldung: 01.09.2010
(73) Patentinhaber: Volkswagen Aktiengesellschaft, 38440 Wolfsburg (DE)
(72) Erfinder: HOFFMANN, Christoph, 38446 Wolfsburg (DE); HOPPMANN, Michael, 38176 Wendeburg/Bortfeld (DE); WOLLENBERG, Marko, 38162 Cremlingen (DE)
(74) Vertreter: Banzer, Hans-Jörg
(86) Internationale Anmeldenummer: PCT/EP2008/010475
(87) Internationale Veröffentlichungsnummer: WO 2009/074304

(56) Entgegenhaltungen:
- EP-A- 0 864 457
- EP-A- 1 074 432
- EP-A- 1 798 128
- EP-A1- 1 074 432
- EP-A1- 1 798 128
- EP-A2- 0 864 457
- DE-A1- 19 805 464
- DE-A1- 19 805 464
- DE-A1-102007 042 077
- DE-A1-102007 042 077
- PÖTTIG W ET AL: "Universelles, sicheres und fehlertolerantes Multicontroller-System; Anwendung in einem vollautomatischen Fahrzeugleitsystem" VDI BERICHTE, DUESSELDORF, DE, 1. Januar 1986 (1986-01-01), Seiten 219-232, XP002281130 ISSN: 0083-5560
- PÖTTIG W ET AL: "Universelles, sicheres und fehlertolerantes Multicontroller-System; Anwendung in einem vollautomatischen Fahrzeugleitsystem", VDI BERICHTE, V D I VERLAG GMBH, DE, 1 January 1986 (1986-01-01), pages 219-232, XP002281130, ISSN: 0083-5560
- WAGNER A ET AL: "Bussysteme in der neuen 7-serie von BMW Bussystems in the new 7-series from BMW", 1 January 1994 (1994-01-01), VDI-BERICHTE: ELEKTRONIK IM KRAFTFAHRZEUG, VDI VERLAG, DUESSELDORF; DE, PAGE(S) 122 - 145, XP007908226, ISBN: 978-3-18-091152-6 * figure 5 *
- BECK R ET AL: "Backbone-Architektur: Vom zentralen Gateway zur systemintegrierenden Kommunikationsplattform", VDI BERICHTE, DUESSELDORF, DE, no. 1646, 27 September 2001 (2001-09-27), pages 277-291, XP002450780, ISSN: 0083-5560
- WÖRNER, S.; BAUER, A.; DROSSOS, A.; GROSS, C.; WILIKENS, A.; EITZENBERGER, K.; MARRONE, F.: "Bordnetz und Telematik - Komfort und Sicherheit", MAYBACH - SONDERAUSGABE VON ATZ UND MTZ, 30 September 2002 (2002-09-30), pages 120-129, XP001537465, DE

## Beschreibung

### Beschreibung für all benannten Staaten : AT, BE, CH, DK, ES, FR, GB, GR, IT, LI, LU, MC, NL SE

Die vorliegende Erfindung betrifft ein Verfahren zum Übertragen von Daten zwischen Steuervorrichtungen in einem Fahrzeug sowie ein Steuersystem für ein Fahrzeug. Das Verfahren und das Steuersystem sind insbesondere für Fahrzeuge mit einem Hybridantrieb geeignet.

In modernen Fahrzeugen sind Steuervorrichtungen des Fahrzeugs über digitale Kommunikationsbusse miteinander verbunden. Ein besonders verbreiteter Kommunikationsbus ist der sogenannte CAN-Bus (Controller Area Network Bus), welcher ein asynchrones, serielles Bussystem ist, welches für die Vernetzung von Steuergeräten in Automobilen entwickelt wurde, um die Kabelbäume zu reduzieren. Mit der steigenden Anzahl elektronischer Steuervorrichtungen in einem Fahrzeug steigt auch die Buslast auf den die Steuervorrichtungen verbindenden CAN-Bus. Die steigende Buslast auf dem CAN-Bus stellt insbesondere bei Fahrzeugen mit einem Hybridantrieb, d.h., Fahrzeuge, welche sowohl über einen Verbrennungsmotor als auch einen Elektromotor zum Antrieb des Fahrzeugs verfügen, ein großes Problem dar, da Hybridfahrzeuge neben den Steuervorrichtungen für die hybridantriebspezifischen Einrichtungen, wie z.B. Pulswechselrichter, Elektromotor, Batteriemanagementsystem und Spindelantrieb zum Koppeln der Antriebe, zusätzlich weitere elektrische Komponenten mit Steuervorrichtungen aufweisen, wie beispielsweise einen elektrischen Klimakompressor oder eine elektrohydraulische Lenkhilfe.

In diesem Zusammenhang ist aus der DE 198 05 464 A1 eine Schaltungsanordnung zur Kommunikation und Diagnose einer Vielzahl elektrischer Komponenten bekannt. Die Schaltungsanordnung umfasst einen High-Speed-Bus und einen Low-Speed-Bus, die über ein von einem Mikroprozessor mit zugehörigen Busschnittstellen gebildetes Gateway miteinander kommunizieren.

Die EP 1 798 128 A1 betrifft ein Steuersystem für ein Fahrzeug mit einem Hybridantrieb. Das Hybridfahrzeug weist einen herkömmlichen öffentlichen Datenbus und mindestens zwei Sekundär-Datenbusse auf. Ein Sekundär-Datenbus verbindet eine Getriebesteuerung mit einer Hybridsystemsteuerung und Getriebegangauswahlsteuerung und stellt einen Netzübergang zu dem öffentlichen Datenbus bereit.

Die EP 1 074 432 A1 betrifft eine gemischte parallele und Daisy-Chain-Bus-Architektur in einem Fahrzeugsicherheitssystem. Das Fahrzeugsicherheitssystem umfasst mehrere Vorrichtungen, welche jeweils eine Funktion ausführen, welche einem Schutz eines Fahrzeuginsassen zugeordnet ist, und Busmittel für eine Kommunikationsübertragung für die Vorrichtungen. Die Busmittel weisen erste und zweite Leiter auf. Ein erster Anteil der Vorrichtungen ist in einer Daisy-Chain-Verbindung bezogen aufeinander entlang einem der Leiter des Busmittels verbunden. Ein zweiter Anteil der Vorrichtungen ist bezogen aufeinander parallel über den ersten und zweiten Leiter des Busmittels verbunden.

Die EP 0 864 457 A2 betrifft ein Antriebssystem für Nutzfahrzeuge. Bei dem Antriebssystem kann ein CAN-Bus für eine Kommunikation zwischen einer Benutzeroberfläche und autark operierenden Aktuatorsystemen bzw. Komponenten-Controllern verwendet werden. Der Bus kann redundant ausgelegt werden, um eine zusätzliche Sicherheit für eine hochpriore Steuerung von Lenkung und Bremse zu erlangen.

Die nachveröffentlichte Druckschrift DE 10 2007 042 077 A1 betrifft eine Systemarchitektur für einen Hybridantriebsstrang. Verschiedene Einrichtungen und Prozessoren sind signaltechnisch über zwei Hochgeschwindigkeits-Doppeldraht-Local-Area-Network-Busse. die einen Fahrzeugbus und einen Hybridbus umfassen, verbunden. Über den Hybridbus sind signaltechnisch ein Maschinensteuermodul ECM, ein Getriebestromumrichtermodul TPIM, ein Hybridsteuerprozessor HCP, Motorsteuerprozessoren MCPA und MCPB verbunden.

Die Veröffentlichung PÖTTIG W ET AL: "Universelles, sicheres und fehlertolerantes Multicontroller-System; Anwendung in einem vollautomatischen Fahrzeugleitsystem", VDI BERICHTE, DUESSELDORF, DE, 1. Januar 1986 (1986-01-01), Seiten 219-232, XP002281130 ISSN: 0083-5560, betrifft ein universelles, sicheres und fehlertolerantes Multicontroller-System. Ein Datenaustausch erfolgt durch ein redundantes serielles Bussystem.

Die gattungebildende Veröffentlichung WAGNER A ET AL: "Bussysteme in der neuen 7-serie von BMW Bussystems in the new 7-series from BMW", 1 Januar 1994 (1994-01-01), VDI-BERICHTE: ELEKTRONIK IM KRAFTFAHRZEUG, VDI VERLAG, DUESSELDORF; DE, PAGE(S) 122 - 145, XP007908226, ISBN: 978-3-18-091152-6, betrifft Bussysteme in der neuen 7-Serie von BMW. Der Datenaustausch zwischen elektronischen Hauptsystemen erfolgt mit Ausnahme des Antriebs- und Fahrwerkbereichs über einen übergeordneten Karosserie-Bus. Die jeweiligen Hauptsystemen beinhalten weitere Busse, den Instrumentierungs-Bus für den Bereich der Instrumentierung und Kommunikation und den Peripherie-Bus für den Bereich der Türen, der Sitze und des Schiebe-/Hebedachs.

Die Veröffentlichung BECK R ET AL: "Backbone-Architektur: Vom zentralen Gateway zur systemintegrierenden Kommunikationsplattform", VDI BERICHTE, DUESSELDORF, DE, Nr. 1646, 27. September 2001 (2001-09-27), Seiten 277-291, XP002450780, ISSN: 0083-5560, betrifft eine Backbone-Architektur für Fahrzeuge. Innerhalb von zunächst autarken, primär rein funktionsorientierten Netzwerken übernimmt jeweils eine zentrale Netzwerkkomponente die Funktion eines lokalen Gateways zur datentechnischen Kopplung mit den anderen Netzwerken. Die Verbindung der lokalen Gateways zu einem globalen Netzwerk wird durch einen Backbone-Bus realisiert, der entsprechend der Datenanforderungen dimensioniert wird.

Die Veröffentlichung WÖRNER, S.; BAUER, A.; DROSSOS, A.; GROSS, C.; WILIKENS, A.; EITZENBERGER, K.; MARRONE, F.: "Bordnetz und Telematik - Komfort und Sicherheit", MAYBACH - SONDERAUSGABE VON ATZ UND MTZ, 30. September 2002 (2002-09-30), Seiten 120-129, XP001537465, DE, betrifft die Vernetzung von CAN-Steuergeräten in einem Fahrzeug. Insgesamt befinden sich vier CAN-Bus-Systeme in dem Fahrzeug. Ein zentrales Gateway stellt den Hauptknotenpunkt dar. Es besitzt insgesamt drei CAN-Anschlüsse für Innenraum, Motorraum und Diagnose. Neben dem zentralen Gateway ist ein Audio-Gateway eine Verbindung zwischen MOST und dem Innenraumbus und routet alle relevanten Daten zwischen diesen beiden Netzen hin und her.

Ein Fahrzeug mit Hybridantrieb wird häufig derart realisiert, dass einem bestehenden Verbrennungsmotorantrieb des Fahrzeugs ein zusätzlicher Antrieb mit einem Elektromotor modular hinzugefügt wird. Da eine starke Interaktion zwischen den beiden Antriebsarten erforderlich ist, besteht die Gefahr, dass der CAN-Bus des bestehenden Verbrennungsmotorantriebs überlastet wird. Ein Entkoppeln der Steuergeräte für den Elektroantrieb von dem Fahrzeug CAN-Bus ist aus folgenden Gründen unerwünscht: zum Einen ist eine Datenkommunikation zwischen dem Elektroantrieb und dem Verbrennungsmotorantrieb erforderlich, um einen effizienten Hybridantrieb zu realisieren, und zum Anderen ist eine Diagnose aller Steuergeräte des Fahrzeugs über einen gemeinsamen CAN-Diagnoseanschluss wünschenswert.

Ein weiteres Problem stellen insbesondere bei Hybridfahrzeugen Störungen auf dem CAN-Bus dar, welche beispielsweise durch beschädigte Steuergeräte auf dem CAN-Bus oder Beschädigungen an dem CAN-Bus selbst hervorgerufen werden, wobei die Beschädigungen beispielsweise bei einem kleinen Umfall des Fahrzeugs auftreten können. Bei einer auf diese Art und Weise gestörten CAN-Bus-Kommunikation besteht insbesondere bei Fahrzeugen mit einem Hybridantrieb das Problem, dass eine Weiterfahrt aufgrund der fehlenden Kommunikation zwischen den Komponenten der Antriebe nicht möglich ist.

Daher ist es Aufgabe der vorliegenden Erfindung ein Verfahren zum Übertragen von Daten zwischen Steuervorrichtungen in einem Fahrzeug sowie ein entsprechendes Steuersystem für ein Fahrzeug bereitzustellen, welches eine hohe Buslast auf einem Datenbus des Fahrzeugs vermeidet und somit eine Datenkommunikation zwischen den Steuervorrichtungen sicherstellt.

Diese Aufgabe wird erfindungsgemäß durch ein Verfahren nach Anspruch 1 und ein Steuersystem nach Anspruch 8 gelöst. Die abhängigen Ansprüche definieren bevorzugte und vorteilhafte Ausführungsformen der Erfindung.

Im Rahmen der vorliegenden Erfindung wird ein Verfahren zum Übertragen von Daten zwischen Steuervorrichtungen in einem Fahrzeug bereitgestellt. Das Fahrzeug umfasst mindestens eine erste Steuervorrichtung und mehrere zweite Steuervorrichtungen. Daten, welche zwischen der mindestens einen ersten Steuervorrichtung und einer der zweiten Steuervorrichtungen zu übertragen sind, werden über einen ersten Datenbus des Fahrzeugs übertragen. Daten, welche zwischen zwei Steuervorrichtungen der zweiten Steuervorrichtungen zu übertragen sind, d.h., zwischen einer der zweiten Steuervorrichtungen und einer weiteren der zweiten Steuervorrichtungen zu übertragen sind, werden über einen zweiten Datenbus des Fahrzeugs übertragen. Bei dem Verfahren ist der erste Datenbus von dem zweiten Datenbus getrennt, so dass Daten auf dem ersten Datenbus unabhängig von dem zweiten Datenbus übertragen werden können. Die ersten Steuervorrichtungen können beispielsweise ein elektronisches Zündschloss, eine Getriebesteuerung, ein Bordnetzsteuergerät und/oder ein Geschwindigkeitsregelungssystem des Fahrzeugs umfassen. Insbesondere bei Hybridfahrzeugen, welche über einen Verbrennungsmotor und einen Elektromotor zum Antrieb des Fahrzeugs verfügen, können die mehreren zweiten Steuervorrichtungen zum Steuern des Elektromotors und der dem Elektromotor zugeordneten Komponenten dienen. Derartige zweite Steuervorrichtungen können beispielsweise einen Pulswechselrichter, ein Batteriemanagementsystem, ein Motorsteuergerät oder einen Spindelaktuator des Fahrzeugs umfassen.

Indem eine Datenübertragung zwischen den zweiten Steuervorrichtungen über den zweiten Datenbus unabhängig von dem ersten Datenbus erfolgt, können die zweiten Steuervorrichtungen einem bestehenden Steuersystem eines Fahrzeugs, welches bereits über die ersten Steuervorrichtungen und den ersten Datenbus verfügt, hinzugefügt werden, ohne dass eine zusätzliche Belastung des ersten Datenbusses für eine Kommunikation zwischen den zweiten Steuervorrichtungen auftritt. Darüber hinaus ist jedoch eine Kommunikation zwischen den zweiten Steuervorrichtungen und den ersten Steuervorrichtungen über den ersten Datenbus möglich. Somit ist insbesondere beim Realisieren eines Hybridfahrzeugs ein Hinzufügen der Steuervorrichtungen des Elektroantriebs zu einem bestehenden Steuersystem des Fahrzeugs möglich, ohne das bestehende Steuersystem zu überlasten oder dessen Übertragungskapazität erweitern zu müssen.

Gemäß einer weiteren Ausführungsform der vorliegenden Erfindung kann mit Hilfe eines Diagnoseanschlusses des ersten Datenbusses die Funktionsweise der ersten Steuervorrichtungen und der zweiten Steuervorrichtungen überprüft werden, indem an den Diagnoseanschluss eine entsprechende Diagnosevorrichtung angeschlossen wird. Da sowohl die ersten Steuervorrichtungen als auch die zweiten Steuervorrichtungen an den ersten Datenbus angeschlossen sind, ist eine Diagnose von sowohl den ersten Steuervorrichtungen als auch den zweiten Steuervorrichtungen über einen gemeinsamen Diagnoseanschluss und eine gemeinsame Diagnosevorrichtung möglich. Insbesondere ist somit bei einem Fahrzeug, welches modular um einen Elektroantrieb erweitert wurde, eine Diagnose der Steuervorrichtungen von sowohl dem elektrischen Antrieb als auch den herkömmlichen Komponenten des Fahrzeugs über einen gemeinsamen Diagnoseanschluss möglich.

In einer weiteren Ausführungsform sind sowohl der ersten Datenbus als auch der zweite Datenbus jeweils ein so genannter CAN-Bus (Controller Area Network Bus). Indem das zuvor beschriebene Verfahren auf einen in Fahrzeugen üblichen CAN-Bus angewendet wird, ist es möglich, die in der Fahrzeugtechnik bekannte und bewährte CAN-Bus-Technologie weiter zu verwenden, obwohl sich die Anzahl der Steuervorrichtungen und das Kommunikationsaufkommen zwischen den Steuervorrichtungen insbesondere bei Hybridfahrzeugen erheblich erhöht.

In einer weiteren Ausführungsform umfasst der erste Datenbus mehrere Datenbusabschnitte und ein Schaltmittel zum wahlweisen Verbinden und Trennen der mehreren Datenbusabschnitte. Sobald eine gestörte Datenübertragung auf einem der mehreren Datenbusabschnitte festgestellt wird, wird der gestörte Datenbusabschnitt von den übrigen Datenbusabschnitten mit Hilfe des Schaltmittels getrennt. Dadurch wird sichergestellt, dass im Fall einer Störung auf einem Datenbusabschnitt, beispielsweise durch einen Kurzschluss auf dem betreffenden Datenbusabschnitt oder einer Störung einer Steuervorrichtung, welche an den betroffenen Datenbusabschnitt angeschlossen ist, diese Störung eine Datenkommunikation auf den übrigen Datenbusabschnitten nicht behindert. Die Datenbusabschnitte können dabei so aufgeteilt werden, dass Steuervorrichtungen des Fahrzeugs, welche in einem unfallgefährdeten Bereich des Fahrzeugs oder an einer Außenseite des Fahrzeugs angeordnet sind, mit einem Datenbusabschnitt verbunden werden, wohingegen Steuervorrichtungen, welche in einem geschützten Bereich des Fahrzeugs untergebracht sind, mit einem weiteren Datenbusabschnitt verbunden werden. Im Fall einer Beschädigung einer Steuervorrichtung oder des Datenbusabschnittes in dem unfallgefährdeten Bereich, beispielsweise einer Steuervorrichtung im Außenspiegel des Fahrzeugs zum Steuern des Außenspiegels oder einer Steuervorrichtung in der Stoßstange des Fahrzeugs zum Steuern von Abstandssensoren einer Einparkhilfe, werden der oder die gestörten Datenbusabschnitte von den übrigen Datenbusabschnitten getrennt, um eine sichere Funktion der Steuervorrichtungen, welche mit den übrigen Datenbusabschnitten verbunden sind, sicherzustellen. So wird ermöglicht, dass nach einer leichten Beschädigung des Fahrzeugs, beispielsweise durch einen kleinen Unfall, trotzdem eine Weiterfahrt möglich ist.

Gemäß der Erfindung wird weiterhin ein Steuersystem für ein Fahrzeug bereitgestellt. Das Steuersystem umfasst einen ersten Datenbus zur Übertragung von Daten zwischen Steuervorrichtungen, mindestens eine erste Steuervorrichtung, welche mit dem ersten Datenbus verbunden ist, und mehrere zweite Steuervorrichtungen, welche mit dem ersten Datenbus verbunden sind. Die mehreren zweiten Steuervorrichtungen sind zusätzlich mit einem zweiten Datenbus des Steuersystems verbunden. Die zweiten Steuervorrichtungen sind derart ausgestaltet, dass Daten, welche zwischen einer ersten Steuervorrichtung und einer zweiten Steuervorrichtung zu übertragen sind, über den ersten Datenbus übertragen werden, und dass Daten, welche zwischen zwei zweiten Steuervorrichtungen zu übertragen sind, über den zweiten Datenbus übertragen werden. Dabei ist der erste Datenbus getrennt von dem zweiten Datenbus ausgelegt. Somit ist eine Kommunikation zwischen den zweiten Steuervorrichtungen unabhängig von einer Kommunikation zwischen den ersten Steuervorrichtungen bzw. den ersten und zweiten Steuervorrichtungen möglich. Insbesondere bei Hybridfahrzeugen kann somit eine Kommunikation zwischen Steuervorrichtungen, welche für den Elektroantrieb des Hybridfahrzeugs zuständig sind, unabhängig von einem bestehenden ersten Datenbus des Fahrzeugs über den zusätzlichen zweiten Datenbus erfolgen. In Folge dessen können die Komponenten des Elektroantriebs für ein Hybridfahrzeug bei einem bestehenden konventionellen Fahrzeug einfach hinzugefügt werden, ohne den bestehenden Datenbus zu überlasten oder den bestehenden Datenbus durch einen leistungsfähigeren Datenbus zu ersetzen.

Gemäß einer weiteren Ausführungsform der Erfindung umfasst das Steuersystem einen Diagnoseanschluss zum Überprüfen der Funktionsweise der ersten und zweiten Steuervorrichtungen. Dazu wird der Diagnoseanschluss an den ersten Datenbus und eine Diagnosevorrichtung an den Diagnoseanschluss angeschlossen. Da sowohl die ersten als auch die zweiten Steuervorrichtungen mit dem ersten Datenbus verbunden sind, ist eine Diagnose dieser Steuervorrichtungen über den gemeinsamen Diagnoseanschluss und eine gemeinsame Diagnosevorrichtung möglich. Somit wird erreicht, dass trotz Verwenden des zweiten Datenbusses eine Diagnose des Fahrzeugs wie üblich über einen gemeinsamen Diagnoseanschluss möglich ist.

Der erste Datenbus des Steuersystems kann mehrere Datenbusabschnitte umfassen, welche über ein Schaltmittel des Steuersystems wahlweise miteinander verbunden oder getrennt werden können. Eine Busüberwachungsvorrichtung des Steuersystems ist derart ausgestaltet, dass sie im Fall einer gestörten Datenübertragung auf einem der mehreren Datenbusabschnitte das Schaltmittel derart ansteuert, dass der gestörte Datenbusabschnitt von den übrigen Datenbusabschnitten getrennt wird. Wird nun beispielsweise durch einen Unfall des Fahrzeugs ein Datenbusabschnitt oder eine Steuervorrichtung an einem Datenbusabschnitt gestört, wodurch die Kommunikation auf dem gesamten Datenbus gestört wird, wird dies mit Hilfe der Busüberwachungsvorrichtung festgestellt und der entsprechend gestörte Datenbusabschnitt von den übrigen Datenbusabschnitten getrennt, um auf den übrigen Datenbusabschnitten eine ungestörte Datenkommunikation aufrechtzuerhalten. Durch geeignetes Aufteilen und Anordnen der Datenbusabschnitte ist es somit möglich, einen Notbetrieb des Fahrzeugs nach einem Unfall aufrechtzuerhalten.

Die vorliegende Erfindung wird nachfolgend unter Bezugnahme auf die Zeichnung anhand bevorzugter Ausführungsformen erläutert.
Fig. 1 zeigt eine schematische Darstellung eines erfindungsgemäßen Steuersystems für ein Fahrzeug.
Fig. 2 zeigt eine schematische Darstellung einer weiteren Ausführungsform eines Steuersystems für ein Fahrzeug.

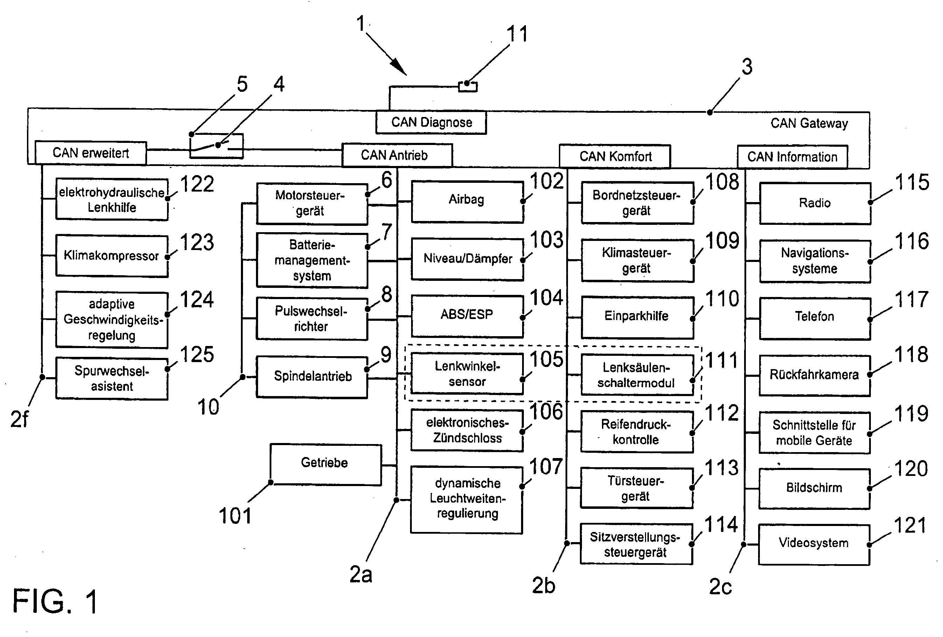

Fig. 1 zeigt ein Steuersystem 1 für ein Fahrzeug. Das Steuersystem 1 umfasst einen ersten CAN-Bus 2a-2c, welcher Steuervorrichtungen 101-121 des Steuersystems des Fahrzeugs verbindet. Der CAN-Bus 2a-2c ist dazu in drei CAN-Bus-Bereiche aufgeteilt, welche über eine CAN-Bus-Verbindungsvorrichtung 3, ein so genanntes CAN-Gateway, miteinander verbunden sind. Ein CAN-Bus-Bereich 2a betrifft dabei den Antrieb des Fahrzeugs und verbindet Steuervorrichtungen für ein Getriebe 101, einen Airbag 102, eine Niveau- und Dämpfersteuerung 103, ein Antiblockiersystem (ABS) und elektronisches Stabilitätsprogramm (ESP) 104, einen Lenkwinkelsensor 105, ein elektronisches Zündschloss 106 und eine dynamische Leuchtweitenregulierung 107. Ein weiterer CAN-Bus-Bereich 2b verbindet Komfortsteuergeräte des Fahrzeugs, welche beispielsweise ein Bordnetzsteuergerät 108, ein Klimasteuergerät 109, eine Einparkhilfe 110, ein Lenksäulenschaltermodul 111, eine Reifendruckkontrolle 112, ein Türsteuergerät 113 und ein Sitzverstellungssteuergerät 114 umfassen. Ein weiterer CAN-Bus-Bereich 2c verbindet Steuersysteme, welche der Informationsbereitstellung für einen Fahrer oder Insassen des Fahrzeugs dienen, wie beispielsweise ein Radio 115, ein Navigationssystem 116, ein Telefon 117, eine Rückfahrkamera 118, eine Schnittstelle für mobile Geräte 119 des Fahrers oder eines Insassen des Fahrzeugs, einen Bildschirm 120 und ein Videosystem 121. Mit Hilfe der CAN-Bus-Bereiche 2a-2c und des CAN-Gateways 3 ist eine Kommunikation zwischen beliebigen Steuervorrichtungen 101-121 möglich.

Der CAN-Bereich 2a für den Antrieb des Fahrzeugs ist über ein Schaltmittel 4 mit einem weiteren CAN-Bus-Bereich 2f verbunden, welcher den CAN-Bus-Bereich 2a für den Antrieb derart erweitert, dass Steuervorrichtungen, welche in einem unfallgefährdeten Bereich des Fahrzeugs angeordnet sind, mit dem CAN-Bus 2a-2c Daten austauschen können, wenn das Schaltmittel 4 den CAN-Bus-Bereich 2f mit dem CAN-Bus-Bereich 2a verbindet. Die Steuervorrichtungen des unfallgefährdeten Bereichs, welche mit dem CAN-Bus-Bereich 2f verbunden sind, umfassen Steuergeräte für eine elektrohydraulische Lenkhilfe 122, einen Klimakompressor 123, eine adaptive Geschwindigkeitsregelung 124 und einen Spurwechselassistenten 125. Eine CAN-Bus-Überwachungsvorrichtung 5 überwacht den CAN-Bus-Bereich 2f und trennt den CAN-Bus-Bereich 2f mit Hilfe des Schaltmittels 4 von dem CAN-Bus-Bereich 2a, wenn eine Funktionsstörung auf dem CAN-Bus-Bereich 2f erkannt wird. Eine derartige Störung kann beispielsweise durch einen Kurzschluss auf dem CAN-Bus-Bereich 2f hervorgerufen werden oder durch eine Funktionsstörung einer der Steuervorrichtungen 122-125, welche mit dem CAN-Bus 2f verbunden sind. Die Steuervorrichtungen 122-125 sowie der CAN-Bus-Bereich 2f sind in einem unfallgefährdeten Bereich des Fahrzeugs verbaut. So ist beispielsweise die Steuervorrichtung 124 für die adaptive Geschwindigkeitsregelung zusammen mit einem Radarsensor in einem Bereich des Kühlergrills des Fahrzeugs verbaut. Bei einem Frontalaufprall des Fahrzeugs besteht daher die Gefahr, dass die Steuervorrichtung 124 oder der mit ihr verbundene CAN-Bus-Abschnitt 2f durch den Unfall beschädigt wird. Da jedoch eine Weiterfahrt des Fahrzeugs prinzipiell auch ohne funktionsfähige adaptive Geschwindigkeitsregelung möglich ist, ist es mit Hilfe des Schaltmittels 4 möglich, den gestörten CAN-Bus-Bereich 2f von den übrigen CAN-Bus-Bereichen 2a-2c des Fahrzeugs zu trennen, so dass das Fahrzeug weiterhin funktionstüchtig bleibt.

Das Fahrzeug, welches über das in Fig. 1 gezeigte Steuersystem 1 verfügt, besitzt zusätzlich zu einem herkömmlichen Antrieb mit Hilfe eines Verbrennungsmotors einen Antrieb mit Hilfe eines Elektromotors. In einem derartigen Fahrzeug, einem so genannten Hybridfahrzeug, sind eine Vielzahl weiterer Steuervorrichtungen für den Antrieb mit Hilfe des Elektromotors und das Zusammenspiel zwischen Elektromotor und Verbrennungsmotor erforderlich. Diese zusätzlichen Steuervorrichtungen umfassen ein Motorsteuergerät 6, welches eine Steuerung des Elektromotors und das Zusammenspiel mit dem Verbrennungsmotor steuert, ein Batteriemanagementsystem 7, welches eine Stromversorgungsbatterie des Elektromotors überwacht und deren Aufladung steuert, einen Pulswechselrichter 8, welcher die für den Elektroantrieb benötigte Spannung bereitstellt, und einen Spindelantrieb 9, welcher eine Kopplung des Verbrennungsmotors und des Elektromotors mit den Antriebsrädern des Fahrzeugs steuert.

Diese Steuervorrichtungen 6-9 sind einerseits mit dem CAN-Bus 2a und zusätzlich mit einem zusätzlichen CAN-Bus 10 verbunden. Eine Datenkommunikation zwischen einer der Steuervorrichtungen 6-9 und einer der Steuervorrichtungen 101-125 erfolgt über den CAN-Bus 2a-2f, wohingegen eine Datenkommunikation zwischen zwei Steuervorrichtungen der Steuervorrichtungen 6-9 über den CAN-Bus 10 erfolgt. Dadurch wird erreicht, dass der CAN-Bus 2a-2f durch die zusätzlichen Steuervorrichtungen 6-9 des elektrischen Antriebs eines Hybridfahrzeugs nur geringfügig mehr belastet wird, da die umfangreiche Kommunikation zwischen den Steuervorrichtung 6-9 des elektrischen Antriebs über den zusätzlichen CAN-Bus 10 abgewickelt wird. Trotzdem sind die Steuervorrichtungen 6-9 auch über den CAN-Bus 2a-2f ansteuerbar, um beispielsweise ein Zusammenspiel mit einem Antiblockiersystem oder einem elektronischen Stabilitätsprogramm 104 oder einer Wegfahrsperre eines elektronischen Zündschlosses 106 sicherzustellen.

Über das CAN-Gateway ist ein CAN-Bus-Diagnoseanschluss 11 mit dem CAN-Bus 2a-2f gekoppelt. Da sowohl die Steuervorrichtungen 101-125 als auch die Steuervorrichtungen 6-9 des elektrischen Antriebs über den CAN-Bus 2a-2f steuerbar sind, ist eine Diagnose der Steuervorrichtungen 101-125 und 6-9 über einen gemeinsamen CAN-Bus-Diagnoseanschluss 11 möglich. Dazu wird eine (nicht gezeigte) Diagnosevorrichtung an den CAN-Bus-Diagnoseanschluss 11 angeschlossen. Mit Hilfe der Diagnosevorrichtung können wie bei einem herkömmlichen Fahrzeug ohne zusätzlichen Elektroantrieb die an dem CAN-Bus 2a-2f angeschlossenen Steuervorrichtungen 101-125 auf ihre korrekte Funktionsweise hin überprüft werden. Verfügt das Fahrzeug ferner über einen zusätzlichen Elektromotor zum Antrieb des Fahrzeugs und somit über die zusätzlichen Steuervorrichtungen 6-9, so können mit Hilfe einer geeignet erweiterten Diagnosevorrichtung auch die Steuervorrichtungen 6-9 über den CAN-Bus-Diagnoseanschluss 11 auf ihre korrekte Funktionsweise überprüft werden.

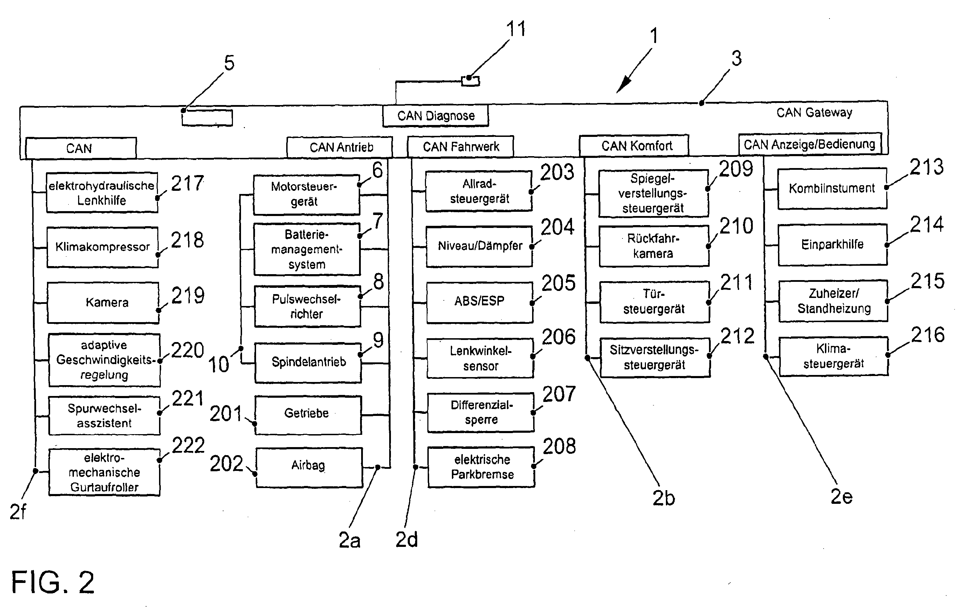

Fig. 2 zeigt eine weitere Ausführungsform eines Steuersystems 1 für ein Fahrzeug. Das Steuersystem 1 umfasst einen CAN-Bus 2a-2f, welcher verschiedene CAN-Bus-Bereiche 2a, 2b, 2d, 2e und 2f umfasst, welche über ein gemeinsames CAN-Gateway 3 gekoppelt sind. Mit den einzelnen CAN-Bus-Bereichen 2a-2f sind eine Vielzahl von Steuervorrichtungen 201-222 des Steuersystems 1 verbunden. So sind beispielsweise mit einem CAN-Bus-Bereich 2a für den Antrieb des Fahrzeugs ein Steuergerät für ein Getriebe 201 und ein Steuergerät für einen Airbag 202 verbunden. Weiterhin sind Steuergeräte einer Allradsteuerung 203, einer Niveau- und Dämpfersteuerung 204, einem Antiblockiersystem (ABS) und einem elektronischen Stabilitätsprogramm (ESP) 205, einem Lenkwinkelsensor 206, einer Differentialsperre 207 und einer elektrischen Parkbremse 208 mit einem CAN-Bus-Bereich 2d für eine Fahrwerkssteuerung verbunden. Ein CAN-Bus-Bereich 2b ist mit Steuergeräten für Komforteinrichtungen des Fahrzeugs verbunden, wie z.B. einer Spiegelverstellung 209, einer Rückfahrkamera 210, einem Türsteuergerät 211 und einer Sitzverstellung 212. Ein weiterer CAN-Bus-Bereich 2e ist mit Steuervorrichtungen für Anzeigen und Bedieneinrichtungen für den Fahrer gekoppelt, wie z.B. mit Steuervorrichtungen für ein Kombiinstrument 213, einer Einparkhilfe 214, einer Zusatzheizung bzw. Standheizung 215 und einer Klimasteuerung 216. Schließlich ist ein weiterer CAN-Bus-Bereich 2f mit Steuergeräten für eine elektrohydraulische Lenkhilfe 217, einen Klimakompressor 218, eine Kamera 219, eine adaptive Geschwindigkeitsregelungsanlage 220, einen Spurwechselassistenten 221 und einen elektromechanischen Gurtaufroller 222 verbunden.

Die einzelnen CAN-Bus-Bereiche 2a-2f sind über das CAN-GAteway 3 miteinander gekoppelt, so dass jede der Steuervorrichtungen 201-222 mit einer anderen Steuervorrichtung der Steuervorrichtungen 201-222 Daten austauschen kann.

In dem CAN-Gateway 3 ist zusätzliche eine Busüberwachungsvorrichtung 5 vorgesehen, welche die Funktion eines jeden der CAN-Bus-Bereiche 2a-2f überwacht, und das CAN-Gateway 3 ist ferner eingerichtet, einen oder mehrere der CAN-Bus-Bereiche 2a-2f in Abhängigkeit von der CAN-Bus-Überwachungsvorrichtung 5 von den übrigen CAN-Bus-Bereichen zu trennen. Stellt beispielsweise die CAN-Bus-Überwachungsvorrichtung 5 einen Kurzschluss oder eine Fehlfunktion auf dem CAN-Bus-Bereich 2b für die Komforteinrichtungen des Fahrzeugs fest, so trennt das CAN-Gateway 3 die Verbindung zwischen dem CAN-Bus-Bereich 2b und den übrigen CAN-Bus-Bereichen 2a, 2d, 2e, 2f, um auf den übrigen CAN-Bus-Bereichen einen störungsfreien Datenaustausch sicherzustellen. Tritt eine weitere Störung auf einem der CAN-Bus-Bereiche auf, beispielsweise in dem CAN-Bus-Bereich 2f, so wird auch dieser CAN-Bus-Bereich von dem CAN-Gateway 3 von den übrigen CAN-Bus-Bereichen 2a, 2d, 2e getrennt.

Wie bereits im Zusammenhang mit Fig. 1 erläutert, werden die einzelnen CAN-Bus-Bereiche 2a-2f vorteilhafterweise derart gewählt, dass Steuervorrichtungen, welche in einem unfallgefährdeten Bereich des Fahrzeugs angeordnet sind, mit Hilfe eines CAN-Bus-Bereiches gekoppelt werden. Triff aufgrund eines Unfalls eine Störung an einem derartigen CAN-Bus-Bereich auf, kann dieser CAN-Bus-Bereich mit Hilfe des CAN-Gateways 3 einfach von den übrigen CAN-Bus-Bereichen getrennt werden und somit ein ungestörter weiterer Betrieb des Fahrzeugs sichergestellt werden.

Wie ebenfalls bereits im Zusammenhang mit Fig. 1 beschrieben, werden bei einem Fahrzeug mit Hybridantrieb die zusätzlichen Steuervorrichtungen, welche für die Steuerung des elektrischen Antriebs des Hybridfahrzeugs benötigt werden, mit dem CAN-Bus-Bereich 2a des Steuersystems 1 verbunden. Dies sind in Fig. 2 das Motorsteuergerät 6, das Batteriemanagementsystem 7, der Pulswechselrichter 8 und der Spindelantrieb 9. Um die durch diese Steuervorrichtungen 6-9 entstehende zusätzliche Kommunikationslast auf dem CAN-Bus 2a-2f des Steuersystems 1 so gering wie möglich zu halten, werden diese Steuervorrichtungen 6-9 zusätzlich über einen weiteren CAN-Bus 10 miteinander verbunden. Eine Kommunikation zwischen einer der Steuervorrichtungen 6-9 mit einer weiteren der Steuervorrichtungen 6-9 erfolgt über den CAN-Bus 10, wohingegen eine Kommunikation zwischen einer der Steuervorrichtungen 6-9 und einer der Steuervorrichtungen 201-222 über den CAN-Bus 2a-2f erfolgt. Dadurch wird eine Datenkommunikation zwischen allen Steuervorrichtungen 6-9 und 201-222 des Steuersystems 1 ermöglicht und trotzdem eine zusätzliche Belastung des CAN-Bus 2a-2f durch die hybridfahrzeugspezifischen Steuervorrichtungen 6-9 verhältnismäßig gering gehalten. Überdies ist eine Diagnose aller Steuervorrichtungen 6-9, 201-222 über einen gemeinsamen CAN-Bus-Diagnoseanschluss 11, welcher mit dem CAN-Bus 2a-2f über das CAN-Gateway 3 verbunden ist, möglich.

### BEZUGSZEICHENLISTE

- 1: Steuersystem
- 2a-2f: CAN-Bus-Bereiche
- 3: CAN-Gateway
- 4: Schaltmittel
- 5: Busüberwachungsvorrichtung
- 6: Motorsteuergerät
- 7: Batteriemanagementsystem
- 8: Pulswechselrichter
- 9: Spindelantrieb
- 10: CAN-Bus
- 11: CAN-Bus-Diagnoseanschluss
- 101-121: Steuervorrichtung
- 122-125: Steuervorrichtung im unfallgefährdeten Bereich
- 201-222: Steuervorrichtung

### Beschreibung für den Benennungsstaat: DE

Die vorliegende Erfindung betrifft ein Verfahren zum Übertragen von Daten zwischen Steuervorrichtungen in einem Fahrzeug sowie ein Steuersystem für ein Fahrzeug. Das Verfahren und das Steuersystem sind insbesondere für Fahrzeuge mit einem Hybridantrieb geeignet.

In modernen Fahrzeugen sind Steuervorrichtungen des Fahrzeugs über digitale Kommunikationsbusse miteinander verbunden. Ein besonders verbreiteter Kommunikationsbus ist der sogenannte CAN-Bus (Controller Area Network Bus), welcher ein asynchrones, serielles Bussystem ist, welches für die Vernetzung von Steuergeräten in Automobilen entwickelt wurde, um die Kabelbäume zu reduzieren. Mit der steigenden Anzahl elektronischer Steuervorrichtungen in einem Fahrzeug steigt auch die Buslast auf den die Steuervorrichtungen verbindenden CAN-Bus. Die steigende Buslast auf dem CAN-Bus stellt insbesondere bei Fahrzeugen mit einem Hybridantrieb, d.h., Fahrzeuge, welche sowohl über einen Verbrennungsmotor als auch einen Elektromotor zum Antrieb des Fahrzeugs verfügen, ein großes Problem dar, da Hybridfahrzeuge neben den Steuervorrichtungen für die hybridantriebspezifischen Einrichtungen, wie z.B. Pulswechselrichter, Elektromotor, Batteriemanagementsystem und Spindelantrieb zum Koppeln der Antriebe, zusätzlich weitere elektrische Komponenten mit Steuervorrichtungen aufweisen, wie beispielsweise einen elektrischen Klimakompressor oder eine elektrohydraulische Lenkhilfe.

In diesem Zusammenhang ist aus der DE 198 05 464 A1 eine Schaltungsanordnung zur Kommunikation und Diagnose einer Vielzahl elektrischer Komponenten bekannt. Die Schaltungsanordnung umfasst einen High-Speed-Bus und einen Low-Speed-Bus, die über ein von einem Mikroprozessor mit zugehörigen Busschnittstellen gebildetes Gateway miteinander kommunizieren.

Die EP 1 798 128 A1 betrifft ein Steuersystem für ein Fahrzeug mit einem Hybridantrieb. Das Hybridfahrzeug weist einen herkömmlichen öffentlichen Datenbus und mindestens zwei Sekundär-Datenbusse auf. Ein Sekundär-Datenbus verbindet eine Getriebesteuerung mit einer Hybridsystemsteuerung und Getriebegangauswahlsteuerung und stellt einen Netzübergang zu dem öffentlichen Datenbus bereit.

Die EP 1 074 432 A1 betrifft eine gemischte parallele und Daisy-Chain-Bus-Architektur in einem Fahrzeugsicherheitssystem. Das Fahrzeugsicherheitssystem umfasst mehrere Vorrichtungen, welche jeweils eine Funktion ausführen, welche einem Schutz eines Fahrzeuginsassen zugeordnet ist, und Busmittel für eine Kommunikationsübertragung für die Vorrichtungen. Die Busmittel weisen erste und zweite Leiter auf. Ein erster Anteil der Vorrichtungen ist in einer Daisy-Chain-Verbindung bezogen aufeinander entlang einem der Leiter des Busmittels verbunden. Ein zweiter Anteil der Vorrichtungen ist bezogen aufeinander parallel über den ersten und zweiten Leiter des Busmittels verbunden.

Die EP 0 864 457 A2 betrifft ein Antriebssystem für Nutzfahrzeuge. Bei dem Antriebssystem kann ein CAN-Bus für eine Kommunikation zwischen einer Benutzeroberfläche und autark operierenden Aktuatorsystemen bzw. Komponenten-Controllern verwendet werden. Der Bus kann redundant ausgelegt werden, um eine zusätzliche Sicherheit für eine hochpriore Steuerung von Lenkung und Bremse zu erlangen.

Die nachveröffentlichte Druckschrift DE 10 2007 042 077 A1 betrifft eine Systemarchitektur für einen Hybridantriebsstrang. Verschiedene Einrichtungen und Prozessoren sind signaltechnisch über zwei Hochgeschwindigkeits-Doppeldraht-Local-Area-Network-Busse, die einen Fahrzeugbus und einen Hybridbus umfassen, verbunden. Über den Hybridbus sind signaltechnisch ein Maschinensteuermodul ECM, ein Getriebestromumrichtermodul TPIM, ein Hybridsteuerprozessor HCP, Motorsteuerprozessoren MCPA und MCPB verbunden.

Die Veröffentlichung PÖTTIG W ET AL: "Universelles, sicheres und fehlertolerantes Multicontroller-System; Anwendung in einem vollautomatischen Fahrzeugleitsystem", VDI BERICHTE, DUESSELDORF, DE, 1. Januar 1986 (1986-01-01), Seiten 219-232, XP002281130 ISSN: 0083-5560, betrifft ein universelles, sicheres und fehlertolerantes Multicontroller-System. Ein Datenaustausch erfolgt durch ein redundantes serielles Bussystem.

Die Veröffentlichung WAGNER A ET AL: "Bussysteme in der neuen 7-serie von BMW Bussystems in the new 7-series from BMW", 1 Januar 1994 (1994-01-01), VDI-BERICHTE: ELEKTRONIK IM KRAFTFAHRZEUG, VDI VERLAG, DUESSELDORF; DE, PAGE(S) 122 - 145, XP007908226, ISBN: 978-3-18-091152-6, betrifft Bussysteme in der neuen 7-Serie von BMW. Der Datenaustausch zwischen elektronischen Hauptsystemen erfolgt mit Ausnahme des Antriebs- und Fahrwerkbereichs über einen übergeordneten Karosserie-Bus. Die jeweiligen Hauptsystemen beinhalten weitere Busse, den Instrumentierungs-Bus für den Bereich der Instrumentierung und Kommunikation und den Peripherie-Bus für den Bereich der Türen, der Sitze und des Schiebe-/Hebedachs.

Die Veröffentlichung BECK R ET AL: "Backbone-Architektur: Vom zentralen Gateway zur systemintegrierenden Kommunikationsplattform", VDI BERICHTE, DUESSELDORF, DE, Nr. 1646, 27. September 2001 (2001-09-27), Seiten 277-291, XP002450780, ISSN: 0083-5560, betrifft eine Backbone-Architektur für Fahrzeuge. Innerhalb von zunächst autarken, primär rein funktionsorientierten Netzwerken übernimmt jeweils eine zentrale Netzwerkkomponente die Funktion eines lokalen Gateways zur datentechnischen Kopplung mit den anderen Netzwerken. Die Verbindung der lokalen Gateways zu einem globalen Netzwerk wird durch einen Backbone-Bus realisiert, der entsprechend der Datenanforderungen dimensioniert wird.

Die Veröffentlichung WÖRNER, S.; BAUER, A.; DROSSOS, A.; GROSS, C.; WILIKENS, A.; EITZENBERGER, K.; MARRONE, F.: "Bordnetz und Telematik - Komfort und Sicherheit", MAYBACH - SONDERAUSGABE VON ATZ UND MTZ, 30. September 2002 (2002-09-30), Seiten 120-129, XP001537465, DE, betrifft die Vernetzung von CAN-Steuergeräten in einem Fahrzeug. Insgesamt befinden sich vier CAN-Bus-Systeme in dem Fahrzeug. Ein zentrales Gateway stellt den Hauptknotenpunkt dar. Es besitzt insgesamt drei CAN-Anschlüsse für Innenraum, Motorraum und Diagnose. Neben dem zentralen Gateway ist ein Audio-Gateway eine Verbindung zwischen MOST und dem Innenraumbus und routet alle relevanten Daten zwischen diesen beiden Netzen hin und her.

Ein Fahrzeug mit Hybridantrieb wird häufig derart realisiert, dass einem bestehenden Verbrennungsmotorantrieb des Fahrzeugs ein zusätzlicher Antrieb mit einem Elektromotor modular hinzugefügt wird. Da eine starke Interaktion zwischen den beiden Antriebsarten erforderlich ist, besteht die Gefahr, dass der CAN-Bus des bestehenden Verbrennungsmotorantriebs überlastet wird. Ein Entkoppeln der Steuergeräte für den Elektroantrieb von dem Fahrzeug CAN-Bus ist aus folgenden Gründen unerwünscht: zum Einen ist eine Datenkommunikation zwischen dem Elektroantrieb und dem Verbrennungsmotorantrieb erforderlich, um einen effizienten Hybridantrieb zu realisieren, und zum Anderen ist eine Diagnose aller Steuergeräte des Fahrzeugs über einen gemeinsamen CAN-Diagnoseanschluss wünschenswert.

Ein weiteres Problem stellen insbesondere bei Hybridfahrzeugen Störungen auf dem CAN-Bus dar, welche beispielsweise durch beschädigte Steuergeräte auf dem CAN-Bus oder Beschädigungen an dem CAN-Bus selbst hervorgerufen werden, wobei die Beschädigungen beispielsweise bei einem kleinen Umfall des Fahrzeugs auftreten können. Bei einer auf diese Art und Weise gestörten CAN-Bus-Kommunikation besteht insbesondere bei Fahrzeugen mit einem Hybridantrieb das Problem, dass eine Weiterfahrt aufgrund der fehlenden Kommunikation zwischen den Komponenten der Antriebe nicht möglich ist.

Daher ist es Aufgabe der vorliegenden Erfindung ein Verfahren zum Übertragen von Daten zwischen Steuervorrichtungen in einem Fahrzeug sowie ein entsprechendes Steuersystem für ein Fahrzeug bereitzustellen, welches eine hohe Buslast auf einem Datenbus des Fahrzeugs vermeidet und somit eine Datenkommunikation zwischen den Steuervorrichtungen sicherstellt.

Diese Aufgabe wird erfindungsgemäß durch ein Verfahren nach Anspruch 1 und ein Steuersystem nach Anspruch 8 gelöst. Die abhängigen Ansprüche definieren bevorzugte und vorteilhafte Ausführungsformen der Erfindung.

Im Rahmen der vorliegenden Erfindung wird ein Verfahren zum Übertragen von Daten zwischen Steuervorrichtungen in einem Fahrzeug bereitgestellt. Das Fahrzeug umfasst mindestens eine erste Steuervorrichtung und mehrere zweite Steuervorrichtungen. Daten, welche zwischen der mindestens einen ersten Steuervorrichtung und einer der zweiten Steuervorrichtungen zu übertragen sind, werden über einen ersten Datenbus des Fahrzeugs übertragen. Daten, welche zwischen zwei Steuervorrichtungen der zweiten Steuervorrichtungen zu übertragen sind, d.h., zwischen einer der zweiten Steuervorrichtungen und einer weiteren der zweiten Steuervorrichtungen zu übertragen sind, werden über einen zweiten Datenbus des Fahrzeugs übertragen. Bei dem Verfahren ist der erste Datenbus von dem zweiten Datenbus getrennt, so dass Daten auf dem ersten Datenbus unabhängig von dem zweiten Datenbus übertragen werden können. Die ersten Steuervorrichtungen können beispielsweise ein elektronisches Zündschloss, eine Getriebesteuerung, ein Bordnetzsteuergerät und/oder ein Geschwindigkeitsregelungssystem des Fahrzeugs umfassen. Insbesondere bei Hybridfahrzeugen, welche über einen Verbrennungsmotor und einen Elektromotor zum Antrieb des Fahrzeugs verfügen, können die mehreren zweiten Steuervorrichtungen zum Steuern des Elektromotors und der dem Elektromotor zugeordneten Komponenten dienen. Die zweiten Steuervorrichtungen umfassen ein Batteriemanagementsystem des Fahrzeugs. Die zweiten Steuervorrichtungen können ferner beispielsweise einen Pulswechselrichter, ein Motorsteuergerät oder einen Spindelaktuator des Fahrzeugs umfassen.

Indem eine Datenübertragung zwischen den zweiten Steuervorrichtungen über den zweiten Datenbus unabhängig von dem ersten Datenbus erfolgt, können die zweiten Steuervorrichtungen einem bestehenden Steuersystem eines Fahrzeugs, welches bereits über die ersten Steuervorrichtungen und den ersten Datenbus verfügt, hinzugefügt werden, ohne dass eine zusätzliche Belastung des ersten Datenbusses für eine Kommunikation zwischen den zweiten Steuervorrichtungen auftritt. Darüber hinaus ist jedoch eine Kommunikation zwischen den zweiten Steuervorrichtungen und den ersten Steuervorrichtungen über den ersten Datenbus möglich. Somit ist insbesondere beim Realisieren eines Hybridfahrzeugs ein Hinzufügen der Steuervorrichtungen des Elektroantriebs zu einem bestehenden Steuersystem des Fahrzeugs möglich, ohne das bestehende Steuersystem zu überlasten oder dessen Übertragungskapazität erweitern zu müssen.

Gemäß einer weiteren Ausführungsform der vorliegenden Erfindung kann mit Hilfe eines Diagnoseanschlusses des ersten Datenbusses die Funktionsweise der ersten Steuervorrichtungen und der zweiten Steuervorrichtungen überprüft werden, indem an den Diagnoseanschluss eine entsprechende Diagnosevorrichtung angeschlossen wird. Da sowohl die ersten Steuervorrichtungen als auch die zweiten Steuervorrichtungen an den ersten Datenbus angeschlossen sind, ist eine Diagnose von sowohl den ersten Steuervorrichtungen als auch den zweiten Steuervorrichtungen über einen gemeinsamen Diagnoseanschluss und eine gemeinsame Diagnosevorrichtung möglich. Insbesondere ist somit bei einem Fahrzeug, welches modular um einen Elektroantrieb erweitert wurde, eine Diagnose der Steuervorrichtungen von sowohl dem elektrischen Antrieb als auch den herkömmlichen Komponenten des Fahrzeugs über einen gemeinsamen Diagnoseanschluss möglich.

In einer weiteren Ausführungsform sind sowohl der ersten Datenbus als auch der zweite Datenbus jeweils ein so genannter CAN-Bus (Controller Area Network Bus). Indem das zuvor beschriebene Verfahren auf einen in Fahrzeugen üblichen CAN-Bus angewendet wird, ist es möglich, die in der Fahrzeugtechnik bekannte und bewährte CAN-Bus-Technologie weiter zu verwenden, obwohl sich die Anzahl der Steuervorrichtungen und das Kommunikationsaufkommen zwischen den Steuervorrichtungen insbesondere bei Hybridfahrzeugen erheblich erhöht.

In einer weiteren Ausführungsform umfasst der erste Datenbus mehrere Datenbusabschnitte und ein Schaltmittel zum wahlweisen Verbinden und Trennen der mehreren Datenbusabschnitte. Sobald eine gestörte Datenübertragung auf einem der mehreren Datenbusabschnitte festgestellt wird, wird der gestörte Datenbusabschnitt von den übrigen Datenbusabschnitten mit Hilfe des Schaltmittels getrennt. Dadurch wird sichergestellt, dass im Fall einer Störung auf einem Datenbusabschnitt, beispielsweise durch einen Kurzschluss auf dem betreffenden Datenbusabschnitt oder einer Störung einer Steuervorrichtung, welche an den betroffenen Datenbusabschnitt angeschlossen ist, diese Störung eine Datenkommunikation auf den übrigen Datenbusabschnitten nicht behindert. Die Datenbusabschnitte können dabei so aufgeteilt werden, dass Steuervorrichtungen des Fahrzeugs, welche in einem unfallgefährdeten Bereich des Fahrzeugs oder an einer Außenseite des Fahrzeugs angeordnet sind, mit einem Datenbusabschnitt verbunden werden, wohingegen Steuervorrichtungen, welche in einem geschützten Bereich des Fahrzeugs untergebracht sind, mit einem weiteren Datenbusabschnitt verbunden werden. Im Fall einer Beschädigung einer Steuervorrichtung oder des Datenbusabschnittes in dem unfallgefährdeten Bereich, beispielsweise einer Steuervorrichtung im Außenspiegel des Fahrzeugs zum Steuern des Außenspiegels oder einer Steuervorrichtung in der Stoßstange des Fahrzeugs zum Steuern von Abstandssensoren einer Einparkhilfe, werden der oder die gestörten Datenbusabschnitte von den übrigen Datenbusabschnitten getrennt, um eine sichere Funktion der Steuervorrichtungen, welche mit den übrigen Datenbusabschnitten verbunden sind, sicherzustellen. So wird ermöglicht, dass nach einer leichten Beschädigung des Fahrzeugs, beispielsweise durch einen kleinen Unfall, trotzdem eine Weiterfahrt möglich ist.

Gemäß der Erfindung wird weiterhin ein Steuersystem für ein Fahrzeug bereitgestellt. Das Steuersystem umfasst einen ersten Datenbus zur Übertragung von Daten zwischen Steuervorrichtungen, mindestens eine erste Steuervorrichtung, welche mit dem ersten Datenbus verbunden ist, und mehrere zweite Steuervorrichtungen, welche mit dem ersten Datenbus verbunden sind. Die mehreren zweiten Steuervorrichtungen sind zusätzlich mit einem zweiten Datenbus des Steuersystems verbunden. Die zweiten Steuervorrichtungen sind derart ausgestaltet, dass Daten, welche zwischen einer ersten Steuervorrichtung und einer zweiten Steuervorrichtung zu übertragen sind, über den ersten Datenbus übertragen werden, und dass Daten, welche zwischen zwei zweiten Steuervorrichtungen zu übertragen sind, über den zweiten Datenbus übertragen werden. Dabei ist der erste Datenbus getrennt von dem zweiten Datenbus ausgelegt. Somit ist eine Kommunikation zwischen den zweiten Steuervorrichtungen unabhängig von einer Kommunikation zwischen den ersten Steuervorrichtungen bzw. den ersten und zweiten Steuervorrichtungen möglich. Die zweiten Steuervorrichtungen umfassen ein Batteriemanagementsystem des Fahrzeugs. Insbesondere bei Hybridfahrzeugen kann somit eine Kommunikation zwischen Steuervorrichtungen, welche für den Elektroantrieb des Hybridfahrzeugs zuständig sind, unabhängig von einem bestehenden ersten Datenbus des Fahrzeugs über den zusätzlichen zweiten Datenbus erfolgen. In Folge dessen können die Komponenten des Elektroantriebs für ein Hybridfahrzeug bei einem bestehenden konventionellen Fahrzeug einfach hinzugefügt werden, ohne den bestehenden Datenbus zu überlasten oder den bestehenden Datenbus durch einen leistungsfähigeren Datenbus zu ersetzen.

Gemäß einer weiteren Ausführungsform der Erfindung umfasst das Steuersystem einen Diagnoseanschluss zum Überprüfen der Funktionsweise der ersten und zweiten Steuervorrichtungen. Dazu wird der Diagnoseanschluss an den ersten Datenbus und eine Diagnosevorrichtung an den Diagnoseanschluss angeschlossen. Da sowohl die ersten als auch die zweiten Steuervorrichtungen mit dem ersten Datenbus verbunden sind, ist eine Diagnose dieser Steuervorrichtungen über den gemeinsamen Diagnoseanschluss und eine gemeinsame Diagnosevorrichtung möglich. Somit wird erreicht, dass trotz Verwenden des zweiten Datenbusses eine Diagnose des Fahrzeugs wie üblich über einen gemeinsamen Diagnoseanschluss möglich ist.

Der erste Datenbus des Steuersystems kann mehrere Datenbusabschnitte umfassen, welche über ein Schaltmittel des Steuersystems wahlweise miteinander verbunden oder getrennt werden können. Eine Busüberwachungsvorrichtung des Steuersystems ist derart ausgestaltet, dass sie im Fall einer gestörten Datenübertragung auf einem der mehreren Datenbusabschnitte das Schaltmittel derart ansteuert, dass der gestörte Datenbusabschnitt von den übrigen Datenbusabschnitten getrennt wird. Wird nun beispielsweise durch einen Unfall des Fahrzeugs ein Datenbusabschnitt oder eine Steuervorrichtung an einem Datenbusabschnitt gestört, wodurch die Kommunikation auf dem gesamten Datenbus gestört wird, wird dies mit Hilfe der Busüberwachungsvorrichtung festgestellt und der entsprechend gestörte Datenbusabschnitt von den übrigen Datenbusabschnitten getrennt, um auf den übrigen Datenbusabschnitten eine ungestörte Datenkommunikation aufrechtzuerhalten. Durch geeignetes Aufteilen und Anordnen der Datenbusabschnitte ist es somit möglich, einen Notbetrieb des Fahrzeugs nach einem Unfall aufrechtzuerhalten.

Die vorliegende Erfindung wird nachfolgend unter Bezugnahme auf die Zeichnung anhand bevorzugter Ausführungsformen erläutert.
Fig. 1 zeigt eine schematische Darstellung eines erfindungsgemäßen Steuersystems für ein Fahrzeug.
Fig. 2 zeigt eine schematische Darstellung einer weiteren Ausführungsform eines Steuersystems für ein Fahrzeug.

Fig. 1 zeigt ein Steuersystem 1 für ein Fahrzeug. Das Steuersystem 1 umfasst einen ersten CAN-Bus 2a-2c, welcher Steuervorrichtungen 101-121 des Steuersystems des Fahrzeugs verbindet. Der CAN-Bus 2a-2c ist dazu in drei CAN-Bus-Bereiche aufgeteilt, welche über eine CAN-Bus-Verbindungsvorrichtung 3, ein so genanntes CAN-Gateway, miteinander verbunden sind. Ein CAN-Bus-Bereich 2a betrifft dabei den Antrieb des Fahrzeugs und verbindet Steuervorrichtungen für ein Getriebe 101, einen Airbag 102, eine Niveau- und Dämpfersteuerung 103, ein Antiblockiersystem (ABS) und elektronisches Stabilitätsprogramm (ESP) 104, einen Lenkwinkelsensor 105, ein elektronisches Zündschloss 106 und eine dynamische Leuchtweitenregulierung 107. Ein weiterer CAN-Bus-Bereich 2b verbindet Komfortsteuergeräte des Fahrzeugs, welche beispielsweise ein Bordnetzsteuergerät 108, ein Klimasteuergerät 109, eine Einparkhilfe 110, ein Lenksäulenschaltermodul 111, eine Reifendruckkontrolle 112, ein Türsteuergerät 113 und ein Sitzverstellungssteuergerät 114 umfassen. Ein weiterer CAN-Bus-Bereich 2c verbindet Steuersysteme, welche der Informationsbereitstellung für einen Fahrer oder Insassen des Fahrzeugs dienen, wie beispielsweise ein Radio 115, ein Navigationssystem 116, ein Telefon 117, eine Rückfahrkamera 118, eine Schnittstelle für mobile Geräte 119 des Fahrers oder eines Insassen des Fahrzeugs, einen Bildschirm 120 und ein Videosystem 121. Mit Hilfe der CAN-Bus-Bereiche 2a-2c und des CAN-Gateways 3 ist eine Kommunikation zwischen beliebigen Steuervorrichtungen 101-121 möglich.

Der CAN-Bereich 2a für den Antrieb des Fahrzeugs ist über ein Schaltmittel 4 mit einem weiteren CAN-Bus-Bereich 2f verbunden, welcher den CAN-Bus-Bereich 2a für den Antrieb derart erweitert, dass Steuervorrichtungen, welche in einem unfallgefährdeten Bereich des Fahrzeugs angeordnet sind, mit dem CAN-Bus 2a-2c Daten austauschen können, wenn das Schaltmittel 4 den CAN-Bus-Bereich 2f mit dem CAN-Bus-Bereich 2a verbindet. Die Steuervorrichtungen des unfallgefährdeten Bereichs, welche mit dem CAN-Bus-Bereich 2f verbunden sind, umfassen Steuergeräte für eine elektrohydraulische Lenkhilfe 122, einen Klimakompressor 123, eine adaptive Geschwindigkeitsregelung 124 und einen Spurwechselassistenten 125. Eine CAN-Bus-Überwachungsvorrichtung 5 überwacht den CAN-Bus-Bereich 2f und trennt den CAN-Bus-Bereich 2f mit Hilfe des Schalmittels 4 von dem CAN-Bus-Bereich 2a, wenn eine Funktionsstörung auf dem CAN-Bus-Bereich 2f erkannt wird. Eine derartige Störung kann beispielsweise durch einen Kurzschluss auf dem CAN-Bus-Bereich 2f hervorgerufen werden oder durch eine Funktionsstörung einer der Steuervorrichtungen 122-125, welche mit dem CAN-Bus 2f verbunden sind. Die Steuervorrichtungen 122-125 sowie der CAN-Bus-Bereich 2f sind in einem unfallgefährdeten Bereich des Fahrzeugs verbaut. So ist beispielsweise die Steuervorrichtung 124 für die adaptive Geschwindigkeitsregelung zusammen mit einem Radarsensor in einem Bereich des Kühlergrills des Fahrzeugs verbaut. Bei einem Frontalaufprall des Fahrzeugs besteht daher die Gefahr, dass die Steuervorrichtung 124 oder der mit ihr verbundene CAN-Bus-Abschnitt 2f durch den Unfall beschädigt wird. Da jedoch eine Weiterfahrt des Fahrzeugs prinzipiell auch ohne funktionsfähige adaptive Geschwindigkeitsregelung möglich ist, ist es mit Hilfe des Schaltmittels 4 möglich, den gestörten CAN-Bus-Bereich 2f von den übrigen CAN-Bus-Bereichen 2a-2c des Fahrzeugs zu trennen, so dass das Fahrzeug weiterhin funktionstüchtig bleibt.

Das Fahrzeug, welches über das in Fig. 1 gezeigte Steuersystem 1 verfügt, besitzt zusätzlich zu einem herkömmlichen Antrieb mit Hilfe eines Verbrennungsmotors einen Antrieb mit Hilfe eines Elektromotors. In einem derartigen Fahrzeug, einem so genannten Hybridfahrzeug, sind eine Vielzahl weiterer Steuervorrichtungen für den Antrieb mit Hilfe des Elektromotors und das Zusammenspiel zwischen Elektromotor und Verbrennungsmotor erforderlich. Diese zusätzlichen Steuervorrichtungen umfassen ein Motorsteuergerät 6, welches eine Steuerung des Elektromotors und das Zusammenspiel mit dem Verbrennungsmotor steuert, ein Batteriemanagementsystem 7, welches eine Stromversorgungsbatterie des Elektromotors überwacht und deren Aufladung steuert, einen Pulswechselrichter 8, welcher die für den Elektroantrieb benötigte Spannung bereitstellt, und einen Spindelantrieb 9, welcher eine Kopplung des Verbrennungsmotors und des Elektromotors mit den Antriebsrädern des Fahrzeugs steuert.

Diese Steuervorrichtungen 6-9 sind einerseits mit dem CAN-Bus 2a und zusätzlich mit einem zusätzlichen CAN-Bus 10 verbunden. Eine Datenkommunikation zwischen einer der Steuervorrichtungen 6-9 und einer der Steuervorrichtungen 101-125 erfolgt über den CAN-Bus 2a-2f, wohingegen eine Datenkommunikation zwischen zwei Steuervorrichtungen der Steuervorrichtungen 6-9 über den CAN-Bus 10 erfolgt. Dadurch wird erreicht, dass der CAN-Bus 2a-2f durch die zusätzlichen Steuervorrichtungen 6-9 des elektrischen Antriebs eines Hybridfahrzeugs nur geringfügig mehr belastet wird, da die umfangreiche Kommunikation zwischen den Steuervorrichtung 6-9 des elektrischen Antriebs über den zusätzlichen CAN-Bus 10 abgewickelt wird. Trotzdem sind die Steuervorrichtungen 6-9 auch über den CAN-Bus 2a-2f ansteuerbar, um beispielsweise ein Zusammenspiel mit einem Antiblockiersystem oder einem elektronischen Stabilitätsprogramm 104 oder einer Wegfahrsperre eines elektronischen Zündschlosses 106 sicherzustellen.

Über das CAN-Gateway ist ein CAN-Bus-Diagnoseanschluss 11 mit dem CAN-Bus 2a-2f gekoppelt. Da sowohl die Steuervorrichtungen 101-125 als auch die Steuervorrichtungen 6-9 des elektrischen Antriebs über den CAN-Bus 2a-2f steuerbar sind, ist eine Diagnose der Steuervorrichtungen 101-125 und 6-9 über einen gemeinsamen CAN-Bus-Diagnoseanschluss 11 möglich. Dazu wird eine (nicht gezeigte) Diagnosevorrichtung an den CAN-Bus-Diagnoseanschluss 11 angeschlossen. Mit Hilfe der Diagnosevorrichtung können wie bei einem herkömmlichen Fahrzeug ohne zusätzlichen Elektroantrieb die an dem CAN-Bus 2a-2f angeschlossenen Steuervorrichtungen 101-125 auf ihre korrekte Funktionsweise hin überprüft werden. Verfügt das Fahrzeug ferner über einen zusätzlichen Elektromotor zum Antrieb des Fahrzeugs und somit über die zusätzlichen Steuervorrichtungen 6-9, so können mit Hilfe einer geeignet erweiterten Diagnosevorrichtung auch die Steuervorrichtungen 6-9 über den CAN-Bus-Diagnoseanschluss 11 auf ihre korrekte Funktionsweise überprüft werden.

Fig. 2 zeigt eine weitere Ausführungsform eines Steuersystems 1 für ein Fahrzeug. Das Steuersystem 1 umfasst einen CAN-Bus 2a-2f, welcher verschiedene CAN-Bus-Bereiche 2a, 2b, 2d, 2e und 2f umfasst, welche über ein gemeinsames CAN-Gateway 3 gekoppelt sind. Mit den einzelnen CAN-Bus-Bereichen 2a-2f sind eine Vielzahl von Steuervorrichtungen 201-222 des Steuersystems 1 verbunden. So sind beispielsweise mit einem CAN-Bus-Bereich 2a für den Antrieb des Fahrzeugs ein Steuergerät für ein Getriebe 201 und ein Steuergerät für einen Airbag 202 verbunden. Weiterhin sind Steuergeräte einer Allradsteuerung 203, einer Niveau- und Dämpfersteuerung 204, einem Antiblockiersystem (ABS) und einem elektronischen Stabilitätsprogramm (ESP) 205, einem Lenkwinkelsensor 206, einer Differentialsperre 207 und einer elektrischen Parkbremse 208 mit einem CAN-Bus-Bereich 2d für eine Fahrwerkssteuerung verbunden. Ein CAN-Bus-Bereich 2b ist mit Steuergeräten für Komforteinrichtungen des Fahrzeugs verbunden, wie z.B. einer Spiegelverstellung 209, einer Rückfahrkamera 210, einem Türsteuergerät 211 und einer Sitzverstellung 212. Ein weiterer CAN-Bus-Bereich 2e ist mit Steuervorrichtungen für Anzeigen und Bedieneinrichtungen für den Fahrer gekoppelt, wie z.B. mit Steuervorrichtungen für ein Kombiinstrument 213, einer Einparkhilfe 214, einer Zusatzheizung bzw. Standheizung 215 und einer Klimasteuerung 216. Schließlich ist ein weiterer CAN-Bus-Bereich 2f mit Steuergeräten für eine elektrohydraulische Lenkhilfe 217, einen Klimakompressor 218, eine Kamera 219, eine adaptive Geschwindigkeitsregelungsanlage 220, einen Spurwechselassistenten 221 und einen elektromechanischen Gurtaufroller 222 verbunden.

Die einzelnen CAN-Bus-Bereiche 2a-2f sind über das CAN-GAteway 3 miteinander gekoppelt, so dass jede der Steuervorrichtungen 201-222 mit einer anderen Steuervorrichtung der Steuervorrichtungen 201-222 Daten austauschen kann.

In dem CAN-Gateway 3 ist zusätzliche eine Busüberwachungsvorrichtung 5 vorgesehen, welche die Funktion eines jeden der CAN-Bus-Bereiche 2a-2f überwacht, und das CAN-Gateway 3 ist ferner eingerichtet, einen oder mehrere der CAN-Bus-Bereiche 2a-2f in Abhängigkeit von der CAN-Bus-Überwachungsvorrichtung 5 von den übrigen CAN-Bus-Bereichen zu trennen. Stellt beispielsweise die CAN-Bus-Überwachungsvorrichtung 5 einen Kurzschluss oder eine Fehlfunktion auf dem CAN-Bus-Bereich 2b für die Komforteinrichtungen des Fahrzeugs fest, so trennt das CAN-Gateway 3 die Verbindung zwischen dem CAN-Bus-Bereich 2b und den übrigen CAN-Bus-Bereichen 2a, 2d, 2e, 2f, um auf den übrigen CAN-Bus-Bereichen einen störungsfreien Datenaustausch sicherzustellen. Tritt eine weitere Störung auf einem der CAN-Bus-Bereiche auf, beispielsweise in dem CAN-Bus-Bereich 2f, so wird auch dieser CAN-Bus-Bereich von dem CAN-Gateway 3 von den übrigen CAN-Bus-Bereichen 2a, 2d, 2e getrennt.

Wie bereits im Zusammenhang mit Fig. 1 erläutert, werden die einzelnen CAN-Bus-Bereiche 2a-2f vorteilhafterweise derart gewählt, dass Steuervorrichtungen, welche in einem unfallgefährdeten Bereich des Fahrzeugs angeordnet sind, mit Hilfe eines CAN-Bus-Bereiches gekoppelt werden. Triff aufgrund eines Unfalls eine Störung an einem derartigen CAN-Bus-Bereich auf, kann dieser CAN-Bus-Bereich mit Hilfe des CAN-Gateways 3 einfach von den übrigen CAN-Bus-Bereichen getrennt werden und somit ein ungestörter weiterer Betrieb des Fahrzeugs sichergestellt werden.

Wie ebenfalls bereits im Zusammenhang mit Fig. 1 beschrieben, werden bei einem Fahrzeug mit Hybridantrieb die zusätzlichen Steuervorrichtungen, welche für die Steuerung des elektrischen Antriebs des Hybridfahrzeugs benötigt werden, mit dem CAN-Bus-Bereich 2a des Steuersystems 1 verbunden. Dies sind in Fig. 2 das Motorsteuergerät 6, das Batteriemanagementsystem 7, der Pulswechselrichter 8 und der Spindelantrieb 9. Um die durch diese Steuervorrichtungen 6-9 entstehende zusätzliche Kommunikationslast auf dem CAN-Bus 2a-2f des Steuersystems 1 so gering wie möglich zu halten, werden diese Steuervorrichtungen 6-9 zusätzlich über einen weiteren CAN-Bus 10 miteinander verbunden. Eine Kommunikation zwischen einer der Steuervorrichtungen 6-9 mit einer weiteren der Steuervorrichtungen 6-9 erfolgt über den CAN-Bus 10, wohingegen eine Kommunikation zwischen einer der Steuervorrichtungen 6-9 und einer der Steuervorrichtungen 201-222 über den CAN-Bus 2a-2f erfolgt. Dadurch wird eine Datenkommunikation zwischen allen Steuervorrichtungen 6-9 und 201-222 des Steuersystems 1 ermöglicht und trotzdem eine zusätzliche Belastung des CAN-Bus 2a-2f durch die hybridfahrzeugspezifischen Steuervorrichtungen 6-9 verhältnismäßig gering gehalten. Überdies ist eine Diagnose aller Steuervorrichtungen 6-9, 201-222 über einen gemeinsamen CAN-Bus-Diagnoseanschluss 11, welcher mit dem CAN-Bus 2a-2f über das CAN-Gateway 3 verbunden ist, möglich.

### BEZUGSZEICHENLISTE

- 1: Steuersystem
- 2a-2f: CAN-Bus-Bereiche
- 3: CAN-Gateway
- 4: Schaltmittel
- 5: Busüberwachungsvorrichtung
- 6: Motorsteuergerät
- 7: Batteriemanagementsystem
- 8: Pulswechselrichter
- 9: Spindelantrieb
- 10: CAN-Bus
- 11: CAN-Bus-Diagnoseanschluss
- 101-121: Steuervorrichtung
- 122-125: Steuervorrichtung im unfallgefährdeten Bereich
- 201-222: Steuervorrichtung

## Patentansprüche (Patentansprüche für folgende(n) Vertragsstaat(en): AT, BE, CH, DK, ES, FR, GB, GR, IT, LI, LU, MC, NL SE)

1. Verfahren zum Übertragen von Daten zwischen Steuervorrichtungen in einem Fahrzeug,
wobei das Fahrzeug mindestens eine erste Steuervorrichtung (101-222) und mehrere zweite Steuervorrichtungen (6-9) umfasst,
wobei die mindestens eine erste Steuervorrichtung (101-222) mit einem ersten Datenbus (2a-2f) des Fahrzeugs verbunden ist und die mehreren zweiten Steuervorrichtungen (6-9) mit einem zweiten Datenbus (10) des Fahrzeugs verbunden sind,
wobei Daten, welche zwischen zwei Steuervorrichtungen (6-9) der zweiten Steuervorrichtungen (6-9) zu übertragen sind, über den zweiten Datenbus (10) des Fahrzeugs übertragen werden, und
wobei der erste Datenbus (2a-2f) von dem zweiten Datenbus (10) getrennt ist,
wobei Datenübertragungen zwischen zwei Steuervorrichtungen (6-9) der zweiten Steuervorrichtungen (6-9) über den zweiten Datenbus (10) unabhängig von dem ersten Datenbus (2a-2f) erfolgen,
**dadurch gekennzeichnet, dass** die mehreren zweiten Steuervorrichtungen (6-9) mit dem ersten Datenbus (2a-2f) verbunden sind,
wobei Daten, welche zwischen der mindestens einen ersten Steuervorrichtung (101-222) und einer Steuervorrichtung (6-9) der zweiten Steuervorrichtungen (6-9) zu übertragen sind, über den ersten Datenbus (2a-2f) des Fahrzeugs übertragen werden.

2. Verfahren nach Anspruch 1, **dadurch gekennzeichnet, dass** das Fahrzeug einen Verbrennungsmotor und einen Elektromotor zum Antrieb des Fahrzeugs umfasst, wobei die mehreren zweiten Steuervorrichtungen (6-9) Steuervorrichtungen (6-9) zum Steuern des Elektromotors und der dem Elektromotor zugeordneten Komponenten umfassen.

3. Verfahren nach Anspruch 1 oder Anspruch 2, **dadurch gekennzeichnet, dass** die mehreren zweiten Steuervorrichtungen (6-9) einen Pulswechselrichter (8) des Fahrzeugs, ein Batteriemanagementsystem (7) des Fahrzeugs, ein Motorsteuergerät (6) des Fahrzeugs und/oder einen Spindelantrieb (9) des Fahrzeugs umfassen.

4. Verfahren nach einem der vorhergehenden Ansprüche, **dadurch gekennzeichnet, dass** mittels einer an einem Diagnoseanschluss (11) des ersten Datenbusses (2a-2f) angeschlossenen Diagnosevorrichtung die Funktionsweise der mindestens einen ersten Steuervorrichtung (101-222) und der mehreren zweiten Steuervorrichtungen (6-9) überprüft wird.

5. Verfahren nach einem der vorhergehenden Ansprüche, **dadurch gekennzeichnet, dass** der erste Datenbus (2a-2f) mehrere Datenbusabschnitte (2a-2f) und ein Schaltmittel (3, 4) zum wahlweisen Verbinden und Trennen der mehreren Datenbusabschnitte (2a-2f) umfasst, wobei im Fall einer gestörten Datenübertragung auf einem der mehreren Datenbusabschnitte (2a-2f) mittels des Schaltmittels (3, 4) der gestörte Datenbusabschnitt (2a-2f) von den übrigen Datenbusabschnitten (2a-2f) getrennt wird.

6. Verfahren nach Anspruch 5, **dadurch gekennzeichnet, dass** einer (2f) der mehreren Datenbusabschnitte (2a-2f) mit Steuervorrichtungen (122-125) des Fahrzeugs verbunden ist, welche in einem unfallgefährdeten Bereich des Fahrzeugs oder an einer Außenseite des Fahrzeugs angeordnet sind.

7. Verfahren nach einem der vorhergehenden Ansprüche, **dadurch gekennzeichnet, dass** die mindestens eine erste Steuervorrichtung (101-222) ein elektronisches Zündschloss (106) des Fahrzeugs, eine Getriebesteuerung (101; 201) des Fahrzeugs, ein Bordnetzsteuergerät (108) des Fahrzeugs und/oder ein Geschwindigkeitsregelungssystem (124; 220) des Fahrzeugs umfasst.

8. Steuersystem für ein Fahrzeug umfassend
einen ersten Datenbus (2a-2f) zur Übertragung von Daten zwischen Steuervorrichtungen, mindestens eine erste Steuervorrichtung (101-222), welche mit dem ersten Datenbus (2a-2f) verbunden ist,
einen zweiten Datenbus (10) zur Übertragung von Daten zwischen Steuervorrichtungen, mehrere zweite Steuervorrichtungen (6-9), welche mit dem zweiten Datenbus (10) verbunden sind,
wobei die zweiten Steuervorrichtungen (6-9) derart ausgestaltet sind, dass Daten, welche zwischen zwei Steuervorrichtungen (6-9) der zweiten Steuervorrichtungen (6-9) zu übertragen sind, über den zweiten Datenbus (10) übertragen werden,
wobei der erste Datenbus (2a-2f) von dem zweiten Datenbus (10) getrennt ist,
wobei Datenübertragungen zwischen zwei Steuervorrichtungen (6-9) der zweiten Steuervorrichtungen (6-9) über den zweiten Datenbus (10) unabhängig von dem ersten Datenbus (2a-2f) erfolgen,
**dadurch gekennzei**chnet, dass die mehreren zweiten Steuervorrichtungen (6-9) zusätzlich mit dem ersten Datenbus (2a-2f) verbunden sind,
wobei die zweiten Steuervorrichtungen (6-9) derart ausgestaltet sind, dass Daten, welche zwischen der mindestens einen ersten Steuervorrichtung (101-222) und einer Steuervorrichtung (6-9) der zweiten Steuervorrichtungen (6-9) zu übertragen sind, über den ersten Datenbus (2a-2f) übertragen werden.

9. Steuersystem nach Anspruch 8, **dadurch gekennzeichnet, dass** das Fahrzeug einen Verbrennungsmotor und einen Elektromotor zum Antrieb des Fahrzeugs umfasst, wobei die mehreren zweiten Steuervorrichtungen (6-9) Steuervorrichtungen (6-9) zum Steuern des Elektromotors und der dem Elektromotor zugeordneten Komponenten umfassen.

10. Steuersystem nach Anspruch 8 oder Anspruch 9, **dadurch gekennzeichnet, dass** die mehreren zweiten Steuervorrichtungen (6-9) einen Pulswechselrichter (8) des Fahrzeugs, ein Batteriemanagementsystem (7) des Fahrzeugs, ein Motorsteuergerät (6) des Fahrzeugs und/oder einen Spindelantrieb (9) des Fahrzeugs umfassen.

11. Steuersystem nach einem der Ansprüche 8-10, **dadurch gekennzeichnet, dass** der erste Datenbus (2a-2f) einen Diagnoseanschluss (11) zum Überprüfen der Funktionsweise der mindestens einen ersten Steuervorrichtung (101-222) und der mehreren zweiten Steuervorrichtungen (6-9) mittels einer an dem Diagnoseanschluss (11) angeschlossenen Diagnosevorrichtung umfasst.

12. Steuersystem nach einem der Ansprüche 8-11, **dadurch gekennzeichnet, dass** der erste Datenbus (2a-2f) mehrere Datenbusabschnitte (2a-2f), ein Schaltmittel (3; 4) zum wahlweisen Verbinden und Trennen der mehreren Datenbusabschnitte (2a-2f) und eine Busüberwachungsvorrichtung (5) umfasst, wobei die Busüberwachungsvorrichtung (5) derart ausgestaltet ist, dass sie im Fall einer gestörten Datenübertragung auf einem der mehreren Datenbusabschnitte (2a-2f) das Schaltmittel (3; 4) derart ansteuert, dass der gestörte Datenbusabschnitt (2a-2f) von den übrigen Datenbusabschnitten (2a-2f) getrennt wird.

13. Steuersystem nach Anspruch 12, **dadurch gekennzeichnet, dass** einer (2f) der mehreren Datenbusabschnitte (2a-2f) mit Steuervorrichtungen (122-125) des Fahrzeugs verbunden ist, welche in einem unfallgefährdeten Bereich des Fahrzeugs oder an einer Außenseite des Fahrzeugs angeordnet sind.

14. Steuersystem nach einem der Ansprüche 8-13, **dadurch gekennzeichnet, dass** die mindestens eine erste Steuervorrichtung (101-222) ein elektronisches Zündschloss (106) des Fahrzeugs, eine Getriebesteuerung (101; 201) des Fahrzeugs, ein Bordnetzsteuergerät (108) des Fahrzeugs und/oder ein Geschwindigkeitsregelungssystem (124; 220) des Fahrzeugs umfasst.

15. Steuersystem nach einem der Ansprüche 8-14, **dadurch gekennzeichnet, dass** der erste Datenbus (2a-2f) und der zweite Datenbus (10) jeweils einen CAN-Bus umfassen.

## Patentansprüche (Patentansprüche für folgende(n) Vertragsstaat(en): DE)

1. Verfahren zum Übertragen von Daten zwischen Steuervorrichtungen in einem Fahrzeug,
wobei das Fahrzeug mindestens eine erste Steuervorrichtung (101-222) und mehrere zweite Steuervorrichtungen (6-9) umfasst,
wobei die mindestens eine erste Steuervorrichtung (101-222) mit einem ersten Datenbus (2a-2f) des Fahrzeugs verbunden ist und die mehreren zweiten Steuervorrichtungen (6-9) mit einem zweiten Datenbus (10) des Fahrzeugs verbunden sind,
wobei Daten, welche zwischen zwei Steuervorrichtungen (6-9) der zweiten Steuervorrichtungen (6-9) zu übertragen sind, über den zweiten Datenbus (10) des Fahrzeugs übertragen werden, und
wobei der erste Datenbus (2a-2f) von dem zweiten Datenbus (10) getrennt ist,
wobei Datenübertragungen zwischen zwei Steuervorrichtungen (6-9) der zweiten Steuervorrichtungen (6-9) über den zweiten Datenbus (10) unabhängig von dem ersten Datenbus (2a-2f) erfolgen,
wobei die mehreren zweiten Steuervorrichtungen (6-9) mit dem ersten Datenbus (2a-2f) verbunden sind,
wobei Daten, welche zwischen der mindestens einen ersten Steuervorrichtung (101-222) und einer Steuervorrichtung (6-9) der zweiten Steuervorrichtungen (6-9) zu übertragen sind, über den ersten Datenbus (2a-2f) des Fahrzeugs übertragen werden,
**dadurch gekennzeichnet, dass** die mehreren zweiten Steuervorrichtungen (6-9) ein Batteriemanagementsystem (7) des Fahrzeugs umfassen.

2. Verfahren nach Anspruch 1, **dadurch gekennzeichnet, dass** das Fahrzeug einen Verbrennungsmotor und einen Elektromotor zum Antrieb des Fahrzeugs umfasst, wobei die mehreren zweiten Steuervorrichtungen (6-9) Steuervorrichtungen (6-9) zum Steuern des Elektromotors und der dem Elektromotor zugeordneten Komponenten umfassen.

3. Verfahren nach Anspruch 1 oder Anspruch 2, **dadurch gekennzeichnet, dass** die mehreren zweiten Steuervorrichtungen (6-9) einen Pulswechselrichter (8) des Fahrzeugs, ein Motorsteuergerät (6) des Fahrzeugs und/oder einen Spindelantrieb (9) des Fahrzeugs umfassen.

4. Verfahren nach einem der vorhergehenden Ansprüche, **dadurch gekennzeichnet, dass** mittels einer an einem Diagnoseanschluss (11) des ersten Datenbusses (2a-2f) angeschlossenen Diagnosevorrichtung die Funktionsweise der mindestens einen ersten Steuervorrichtung (101-222) und der mehreren zweiten Steuervorrichtungen (6-9) überprüft wird.

5. Verfahren nach einem der vorhergehenden Ansprüche, **dadurch gekennzeichnet, dass** der erste Datenbus (2a-2f) mehrere Datenbusabschnitte (2a-2f) und ein Schaltmittel (3, 4) zum wahlweisen Verbinden und Trennen der mehreren Datenbusabschnitte (2a-2f) umfasst, wobei im Fall einer gestörten Datenübertragung auf einem der mehreren Datenbusabschnitte (2a-2f) mittels des Schaltmittels (3, 4) der gestörte Datenbusabschnitt (2a-2f) von den übrigen Datenbusabschnitten (2a-2f) getrennt wird.

6. Verfahren nach Anspruch 5, **dadurch gekennzeichnet, dass** einer (2f) der mehreren Datenbusabschnitte (2a-2f) mit Steuervorrichtungen (122-125) des Fahrzeugs verbunden ist, welche in einem unfallgefährdeten Bereich des Fahrzeugs oder an einer Außenseite des Fahrzeugs angeordnet sind.

7. Verfahren nach einem der vorhergehenden Ansprüche, **dadurch gekennzeichnet, dass** die mindestens eine erste Steuervorrichtung (101-222) ein elektronisches Zündschloss (106) des Fahrzeugs, eine Getriebesteuerung (101; 201) des Fahrzeugs, ein Bordnetzsteuergerät (108) des Fahrzeugs und/oder ein Geschwindigkeitsregelungssystem (124; 220) des Fahrzeugs umfasst.

8. Steuersystem für ein Fahrzeug umfassend
einen ersten Datenbus (2a-2f) zur Übertragung von Daten zwischen Steuervorrichtungen, mindestens eine erste Steuervorrichtung (101-222), welche mit dem ersten Datenbus (2a-2f) verbunden ist,
einen zweiten Datenbus (10) zur Übertragung von Daten zwischen Steuervorrichtungen, mehrere zweite Steuervorrichtungen (6-9), welche mit dem zweiten Datenbus (10) verbunden sind,
wobei die zweiten Steuervorrichtungen (6-9) derart ausgestaltet sind, dass Daten, welche zwischen zwei Steuervorrichtungen (6-9) der zweiten Steuervorrichtungen (6-9) zu übertragen sind, über den zweiten Datenbus (10) übertragen werden,
wobei der erste Datenbus (2a-2f) von dem zweiten Datenbus (10) getrennt ist,
wobei Datenübertragungen zwischen zwei Steuervorrichtungen (6-9) der zweiten Steuervorrichtungen (6-9) über den zweiten Datenbus (10) unabhängig von dem ersten Datenbus (2a-2f) erfolgen,
wobei die mehreren zweiten Steuervorrichtungen (6-9) zusätzlich mit dem ersten Datenbus (2a-2f) verbunden sind,
wobei die zweiten Steuervorrichtungen (6-9) derart ausgestaltet sind, dass Daten, welche zwischen der mindestens einen ersten Steuervorrichtung (101-222) und einer Steuervorrichtung (6-9) der zweiten Steuervorrichtungen (6-9) zu übertragen sind, über den ersten Datenbus (2a-2f) übertragen werden
**dadurch gekennzeichnet, dass** die mehreren zweiten Steuervorrichtungen (6-9) ein Batteriemanagementsystem (7) des Fahrzeugs umfassen.

9. Steuersystem nach Anspruch 8, **dadurch gekennzeichnet, dass** das Fahrzeug einen Verbrennungsmotor und einen Elektromotor zum Antrieb des Fahrzeugs umfasst, wobei die mehreren zweiten Steuervorrichtungen (6-9) Steuervorrichtungen (6-9) zum Steuern des Elektromotors und der dem Elektromotor zugeordneten Komponenten umfassen.

10. Steuersystem nach Anspruch 8 oder Anspruch 9, **dadurch gekennzeichnet, dass** die mehreren zweiten Steuervorrichtungen (6-9) einen Pulswechselrichter (8) des Fahrzeugs, ein Motorsteuergerät (6) des Fahrzeugs und/oder einen Spindelantrieb (9) des Fahrzeugs umfassen.

11. Steuersystem nach einem der Ansprüche 8-10, **dadurch gekennzeichnet, dass** der erste Datenbus (2a-2f) einen Diagnoseanschluss (11) zum Überprüfen der Funktionsweise der mindestens einen ersten Steuervorrichtung (101-222) und der mehreren zweiten Steuervorrichtungen (6-9) mittels einer an dem Diagnoseanschluss (11) angeschlossenen Diagnosevorrichtung umfasst.

12. Steuersystem nach einem der Ansprüche 8-11, **dadurch gekennzeichnet, dass** der erste Datenbus (2a-2f) mehrere Datenbusabschnitte (2a-2f), ein Schaltmittel (3; 4) zum wahlweisen Verbinden und Trennen der mehreren Datenbusabschnitte (2a-2f) und eine Busüberwachungsvorrichtung (5) umfasst, wobei die Busüberwachungsvorrichtung (5) derart ausgestaltet ist, dass sie im Fall einer gestörten Datenübertragung auf einem der mehreren Datenbusabschnitte (2a-2f) das Schaltmittel (3; 4) derart ansteuert, dass der gestörte Datenbusabschnitt (2a-2f) von den übrigen Datenbusabschnitten (2a-2f) getrennt wird.

13. Steuersystem nach Anspruch 12, **dadurch gekennzeichnet, dass** einer (2f) der mehreren Datenbusabschnitte (2a-2f) mit Steuervorrichtungen (122-125) des Fahrzeugs verbunden ist, welche in einem unfallgefährdeten Bereich des Fahrzeugs oder an einer Außenseite des Fahrzeugs angeordnet sind.

14. Steuersystem nach einem der Ansprüche 8-13, **dadurch gekennzeichnet, dass** die mindestens eine erste Steuervorrichtung (101-222) ein elektronisches Zündschloss (106) des Fahrzeugs, eine Getriebesteuerung (101; 201) des Fahrzeugs, ein Bordnetzsteuergerät (108) des Fahrzeugs und/oder ein Geschwindigkeitsregelungssystem (124; 220) des Fahrzeugs umfasst.

15. Steuersystem nach einem der Ansprüche 8-14, **dadurch gekennzeichnet, dass** der erste Datenbus (2a-2f) und der zweite Datenbus (10) jeweils einen CAN-Bus umfassen.

## Claims (Claims for the following Contracting State(s): AT, BE, CH, DK, ES, FR, GB, GR, IT, LI, LU, MC, NL SE)

1. Method for transmitting data between control devices in a vehicle, wherein the vehicle comprises at least one first control device (101-222) and a plurality of second control devices (6-9),
wherein the at least one first control device (101-222) is connected to a first data bus (2a-2f) of the vehicle, and the plurality of second control devices (6-9) are connected to a second data bus (10) of the vehicle,
wherein data which is to be transmitted between two control devices (6-9) of the second control devices (6-9) is transmitted via the second data bus (10) of the vehicle, and
wherein the first data bus (2a-2f) is disconnected from the second data bus (10),
wherein data transmissions between two control devices (6-9) of the second control devices (6-9) via the second data bus (10) take place independently of the first data bus (2a-2f), **characterized in that** the plurality of second control devices (6-9) are connected to the first data bus (2a-2f),
wherein data which is to be transmitted between the at least one first control device (101-222) and a control device (6-9) of the second control devices (6-9) is transmitted via the first data bus (2a-2f) of the vehicle.

2. Method according to Claim 1, **characterized in that** the vehicle comprises an internal combustion engine and an electric motor for driving the vehicle, wherein the plurality of second control devices (6-9) comprise control devices (6-9) for controlling the electric motor and the components assigned to the electric motor.

3. Method according to Claim 1 or Claim 2, **characterized in that** the plurality of second control devices (6-9) comprise a pulse inverter (8) of the vehicle, a battery management system (7) of the vehicle, an engine control unit (6) of the vehicle and/or a spindle drive (9) of the vehicle.

4. Method according to one of the preceding claims, **characterized in that** the method of functioning of the at least one first control device (101-222) and of the plurality of second control devices (6-9) is checked by means of a diagnostic device which is connected to a diagnostic terminal (11) of the first data bus (2a-2f).

5. Method according to one of the preceding claims, **characterized in that** the first data bus (2a-2f) comprises a plurality of data bus sections (2a-2f) and a switching means (3, 4) for selectively connecting and disconnecting the plurality of data bus sections (2a-2f), wherein in the event of a disrupted data transmission on one of the plurality of data bus sections (2a-2f) the disrupted data bus section (2a-2f) is disconnected from the other data bus sections (2a-2f) by means of the switching means (3, 4).

6. Method according to Claim 5, **characterized in that** one of the plurality of data bus sections (2a-2f) is connected to control devices (122-125) of the vehicle, which are arranged in a region of the vehicle which is at risk in the event of an accident or on an outer side of the vehicle.

7. Method according to one of the preceding claims, **characterized in that** the at least one first control device (101-222) comprises an electronic ignition lock (106) of the vehicle, a transmission controller (101; 201) of the vehicle, an on-board power system control unit (108) of the vehicle and/or a cruise control system (124; 220) of the vehicle.

8. Control system for a vehicle, comprising
a first data bus (2a-2f) for transmitting data between control devices,
at least one first control device (101-222) which is connected to the first data bus (2a-2f),
a second data bus (10) for transmitting data between control devices,
a plurality of second control devices (6-9) which are connected to the second data bus (10),
wherein the second control devices (6-9) are configured in such a way that data which is to be transmitted between two control devices (6-9) of the second control devices (6-9) is transmitted via the second data bus (10),
wherein the first data bus (2a-2f) is disconnected from the second data bus (10),
wherein data transmissions between two control devices (6-9) of the second control devices (6-9) via the second data bus (10) take place independently of the first data bus (2a-2f), **characterized in that** the plurality of second control devices (6-9) are additionally connected to the first data bus (2a-2f),
wherein the second control devices (6-9) are configured in such a way that data which is to be transmitted between the at least one first control device (101-222) and a control device (6-9) of the second control devices (6-9) is transmitted via the first data bus (2a-2f).

9. Control system according to Claim 8, **characterized in that** the vehicle comprises an internal combustion engine and an electric motor for driving the vehicle, wherein the plurality of second control devices (6-9) comprise control devices (6-9) for controlling the electric motor and the components assigned to the electric motor.

10. Control system according to Claim 8 or Claim 9, **characterized in that** the plurality of second control devices (6-9) comprise a pulse inverter (8) of the vehicle, a battery management system (7) of the vehicle, an engine control unit (6) of the vehicle and/or a spindle drive (9) of the vehicle.

11. Control system according to one of Claims 8-10, **characterized in that** the first data bus (2a-2f) comprises a diagnostic terminal (11) for checking the method of functioning of the at least one first control device (101-222) and of the plurality of second control devices (6-9) by means of a diagnostic device which is connected to the diagnostic terminal (11).

12. Control system according to one of Claims 8-11, **characterized in that** the first data bus (2a-2f) comprises a plurality of data bus sections (2a-2f), a switching means (3; 4) for selectively connecting and disconnecting the plurality of data bus sections (2a-2f) and a bus-monitoring device (5), wherein the bus-monitoring device (5) is configured in such a way that in the event of a disrupted data transmission on one of the plurality of data bus sections (2a-2f) it actuates the switching means (3; 4) in such a way that the disrupted data bus section (2a-2f) is disconnected from the other data bus sections (2a-2f).

13. Control system according to Claim 12, **characterized in that** one of the plurality of data bus sections (2a-2f) is connected to control devices (122-125) of the vehicle, which are arranged in a region of the vehicle which is at risk in the event of an accident or on an outer side of the vehicle.

14. Control system according to one of Claims 8-13, **characterized in that** the at least one first control device (101-222) comprises an electronic ignition lock (106) of the vehicle, a transmission controller (101; 201) of the vehicle, an on-board power system control unit (108) of the vehicle and/or a cruise control system (124; 220) of the vehicle.

15. Control system according to one of Claims 8-14, **characterized in that** the first data bus (2a-2f) and the second data bus (10) each comprise a CAN bus.

## Claims (Claims for the following Contracting State(s): DE)

1. Method for transmitting data between control devices in a vehicle, wherein the vehicle comprises at least one first control device (101-222) and a plurality of second control devices (6-9),
wherein the at least one first control device (101-222) is connected to a first data bus (2a-2f) of the vehicle, and the plurality of second control devices (6-9) are connected to a second data bus (10) of the vehicle,
wherein data which is to be transmitted between two control devices (6-9) of the second control devices (6-9) is transmitted via the second data bus (10) of the vehicle, and
wherein the first data bus (2a-2f) is disconnected from the second data bus (10),
wherein data transmissions between two control devices (6-9) of the second control devices (6-9) via the second data bus (10) take place independently of the first data bus (2a-2f),
wherein the plurality of second control devices (6-9) are connected to the first data bus (2a-2f), wherein data which is to be transmitted between the at least one first control device (101-222) and a control device (6-9) of the second control devices (6-9) is transmitted via the first data bus (2a-2f) of the vehicle,
**characterized in that** the plurality of second control devices (6-9) comprise a battery management system (7) of the vehicle.

2. Method according to Claim 1, **characterized in that** the vehicle comprises an internal combustion engine and an electric motor for driving the vehicle, wherein the plurality of second control devices (6-9) comprise control devices (6-9) for controlling the electric motor and the components assigned to the electric motor.

3. Method according to Claim 1 or Claim 2, **characterized in that** the plurality of second control devices (6-9) comprise a pulse inverter (8) of the vehicle, an engine control unit (6) of the vehicle and/or a spindle drive (9) of the vehicle.

4. Method according to one of the preceding claims, **characterized in that** the method of functioning of the at least one first control device (101-222) and of the plurality of second control devices (6-9) is checked by means of a diagnostic device which is connected to a diagnostic terminal (11) of the first data bus (2a-2f).

5. Method according to one of the preceding claims, **characterized in that** the first data bus (2a-2f) comprises a plurality of data bus sections (2a-2f) and a switching means (3, 4) for selectively connecting and disconnecting the plurality of data bus sections (2a-2f), wherein in the event of a disrupted data transmission on one of the plurality of data bus sections (2a-2f) the disrupted data bus section (2a-2f) is disconnected from the other data bus sections (2a-2f) by means of the switching means (3, 4).

6. Method according to Claim 5, **characterized in that** one of the plurality of data bus sections (2a-2f) is connected to control devices (122-125) of the vehicle, which are arranged in a region of the vehicle which is at risk in the event of an accident or on an outer side of the vehicle.

7. Method according to one of the preceding claims, **characterized in that** the at least one first control device (101-222) comprises an electronic ignition lock (106) of the vehicle, a transmission controller (101; 201) of the vehicle, an on-board power system control unit (108) of the vehicle and/or a cruise control system (124; 220) of the vehicle.

8. Control system for a vehicle, comprising
a first data bus (2a-2f) for transmitting data between control devices,
at least one first control device (101-222) which is connected to the first data bus (2a-2f),
a second data bus (10) for transmitting data between control devices,
a plurality of second control devices (6-9) which are connected to the second data bus (10),
wherein the second control devices (6-9) are configured in such a way that data which is to be transmitted between two control devices (6-9) of the second control devices (6-9) is transmitted via the second data bus (10),
wherein the first data bus (2a-2f) is disconnected from the second data bus (10),
wherein data transmissions between two control devices (6-9) of the second control devices (6-9) via the second data bus (10) take place independently of the first data bus (2a-2f),
wherein the plurality of second control devices (6-9) are additionally connected to the first data bus (2a-2f),
wherein the second control devices (6-9) are configured in such a way that data which is to be transmitted between the at least one first control device (101-222) and a control device (6-9) of the second control devices (6-9) is transmitted via the first data bus (2a-2f),
**characterized in that** the plurality of second control devices (6-9) comprise a battery management system (7) of the vehicle.

9. Control system according to Claim 8, **characterized in that** the vehicle comprises an internal combustion engine and an electric motor for driving the vehicle, wherein the plurality of second control devices (6-9) comprise control devices (6-9) for controlling the electric motor and the components assigned to the electric motor.

10. Control system according to Claim 8 or Claim 9, **characterized in that** the plurality of second control devices (6-9) comprise a pulse inverter (8) of the vehicle, an engine control unit (6) of the vehicle and/or a spindle drive (9) of the vehicle.

11. Control system according to one of Claims 8-10, **characterized in that** the first data bus (2a-2f) comprises a diagnostic terminal (11) for checking the method of functioning of the at least one first control device (101-222) and of the plurality of second control devices (6-9) by means of a diagnostic device which is connected to the diagnostic terminal (11).

12. Control system according to one of Claims 8-11, **characterized in that** the first data bus (2a-2f) comprises a plurality of data bus sections (2a-2f), a switching means (3; 4) for selectively connecting and disconnecting the plurality of data bus sections (2a-2f) and a bus-monitoring device (5), wherein the bus-monitoring device (5) is configured in such a way that in the event of a disrupted data transmission on one of the plurality of data bus sections (2a-2f) it actuates the switching means (3; 4) in such a way that the disrupted data bus section (2a-2f) is disconnected from the other data bus sections (2a-2f).

13. Control system according to Claim 12, **characterized in that** one of the plurality of data bus sections (2a-2f) is connected to control devices (122-125) of the vehicle, which are arranged in a region of the vehicle which is at risk in the event of an accident or on an outer side of the vehicle.

14. Control system according to one of Claims 8-13, **characterized in that** the at least one first control device (101-222) comprises an electronic ignition lock (106) of the vehicle, a transmission controller (101; 201) of the vehicle, an on-board power system control unit (108) of the vehicle and/or a cruise control system (124; 220) of the vehicle.

15. Control system according to one of Claims 8-14, **characterized in that** the first data bus (2a-2f) and the second data bus (10) each comprise a CAN bus.

## Revendications (Revendications pour l'(les) Etat(s) contractant(s) suivant(s): AT, BE, CH, DK, ES, FR, GB, GR, IT, LI, LU, MC, NL SE)

1. Procédé de transfert de données entre des ensembles de commande d'un véhicule, le véhicule comportant au moins un premier ensemble de commande (101-222) et plusieurs deuxièmes dispositifs de commande (6-9),
le ou les premiers ensembles de commande (101-222) étant raccordés à un premier bus de données (2a-2f) du véhicule et les différents deuxièmes ensembles de commande (6-9) étant reliés à un deuxième bus de données (10) du véhicule,
des données qui doivent être transférées entre deux ensembles de commande (6-9) des deuxièmes ensembles de commande (6-9) étant transférées sur le deuxième bus de données (10) du véhicule et
le premier bus de données (2a-2f) étant séparé du deuxième bus de données (10),
les transferts de données entre deux ensembles de commande (6-9) des deuxièmes ensembles de commande (6-9) s'effectuant sur le deuxième bus de données (10) indépendamment du premier bus de données (2a-2f), **caractérisé en ce que** les différents deuxièmes ensembles de commande (6-9) sont reliés au premier bus de données (2a-2f) et
des données qui doivent être transférées entre le ou les premiers ensembles de commande (101-222) et un ensemble de commande (6-9) des deuxièmes ensembles de commande (6-9) étant transmises par l'intermédiaire du premier bus de données (2a-2f) du véhicule.

2. Procédé selon la revendication 1, **caractérisé en ce que** le véhicule comporte pour l'entraînement du véhicule un moteur à combustion interne et un moteur électrique, les différents deuxièmes ensembles de commande (6-9) comprenant des ensembles de commande (6-9) qui commandent le moteur électrique et les composants associés au moteur électrique.

3. Procédé selon la revendication 1 ou la revendication 2, **caractérisé en ce que** les différents deuxièmes ensembles de commande (6-9) comportent un redresseur (8) d'impulsions du véhicule, un système (7) de gestion de batteries du véhicule, un appareil (6) de commande du moteur du véhicule et/ou un entraînement à broche (9) du véhicule.

4. Procédé selon l'une des revendications précédentes, **caractérisé en ce que** le mode de fonctionnement du ou des premiers ensembles de commande (101-222) ou des différents deuxièmes ensembles de commande (6-9) est vérifié au moyen d'un ensemble de diagnostic raccordé à une borne de diagnostic (11) du premier bus de données (2a-2f).

5. Procédé selon l'une des revendications précédentes, **caractérisé en ce que** le premier bus de données (2a-2f) comporte plusieurs sections (2a-2f) de bus de données et un moyen de commutation (3, 4) qui permet de relier et de séparer sélectivement les différentes sections (2a-2f) de bus de données, et **en ce qu'**en cas de perturbation du transfert de données sur l'une des différentes sections (2a-2f) de bus de données, la section (2a-2f) perturbée du bus de données est séparée au moyen des moyens de commutation (3, 4) des autres sections (2a-2f) du bus de données.

6. Procédé selon la revendication 5, **caractérisé en ce que** l'une (2f) des différentes sections (2a-2f) de bus de données est reliée à des ensembles de commande (122-125) du véhicule qui sont disposés dans une partie du véhicule susceptible d'être mise en danger en cas d'accident ou à l'extérieur du véhicule.

7. Procédé selon l'une des revendications précédentes, **caractérisé en ce que** le ou les premiers ensembles de commande (101-222) comportent une serrure électronique d'allumage (106) du véhicule, une commande de transmission (101; 201) du véhicule, un appareil de commande (108) du réseau de bord du véhicule et/ou un système (124; 220) de régulation de la vitesse du véhicule.

8. Système de commande pour véhicule, comprenant :
un premier bus de données (2a-2f) qui transfère des données entre des ensembles de commande, au moins un premier ensemble de commande (101-222) raccordé au premier bus de données (2a-2f),
un deuxième bus de données (10) qui transfère des données entre des ensembles de commande, plusieurs deuxièmes ensembles de commande (6, 9) raccordés au deuxième bus de données (10),
les deuxièmes ensembles de commande (6-9) étant configurés de telle sorte que des données qui doivent être transmises entre deux ensembles de commande (6-9) des deuxièmes ensembles de commande (6-9) sont transférées sur le deuxième bus de données (10),
le premier bus de données (2a-2f) étant séparé du deuxième bus de données (10),
les transferts de données entre deux ensembles de commande (6-9) des deuxièmes ensembles de commande (6-9) s'effectuant sur le deuxième bus de données (10) indépendamment du premier bus de données (2a-2f),
**caractérisé en ce que** les différents deuxièmes ensembles de commande (6-9) sont reliés au premier bus de données (2a-2f) et
les deuxièmes ensembles de commande (6-9) étant configurés de telle sorte que des données qui doivent être transférées entre le ou les premiers ensembles de commande (101-222) et un ensemble de commande (6-9) des deuxièmes ensembles de commande (6-9) étant transmises par l'intermédiaire du premier bus de données (2a-2f) du véhicule.

9. Système de commande selon la revendication 8, **caractérisé en ce que** le véhicule comporte pour l'entraînement du véhicule un moteur à combustion interne et un moteur électrique, les différents deuxièmes ensembles de commande (6-9) comprenant des ensembles de commande (6-9) qui commandent le moteur électrique et les composants associés au moteur électrique.

10. Système de commande selon la revendication 8 ou la revendication 9, **caractérisé en ce que** les différents deuxièmes ensembles de commande (6-9) comportent un redresseur (8) d'impulsions du véhicule, un système (7) de gestion de batteries du véhicule, un appareil (6) de commande du moteur du véhicule et/ou un entraînement à broche (9) du véhicule.

11. Système de commande selon l'une des revendications 8 à 10, **caractérisé en ce que** le premier bus de données (2a-2f) comporte une borne de diagnostic (11) qui permet de vérifier le mode de fonctionnement du ou des premiers ensembles de commande (101-222) et des différents deuxièmes ensembles de commande (6-9) au moyen d'un ensemble de diagnostic raccordé à la borne de diagnostic (11).

12. Système de commande selon l'une des revendications 8 à 11, **caractérisé en ce que** le premier bus de données (2a-2f) comporte plusieurs sections (2a-2f) de bus de données et un moyen de commutation (3; 4) qui permet de relier et de séparer sélectivement les différentes sections (2a-2f) de bus de données, et **en ce qu'**en cas de perturbation du transfert de données sur l'une des différentes sections (2a-2f) de bus de données, la section (2a-2f) perturbée du bus de données est séparée au moyen des moyens de commutation (3; 4) des autres sections (2a-2f) du bus de données.

13. Système de commande selon la revendication 12, **caractérisé en ce que** l'une (2f) des différentes sections (2a-2f) de bus de données est reliée à des ensembles de commande (122-125) du véhicule qui sont disposés dans une partie du véhicule susceptible d'être mise en danger en cas d'accident ou à l'extérieur du véhicule.

14. Système de commande selon l'une des revendications 8 à 13, **caractérisé en ce que** le ou les premiers ensembles de commande (101-222) comportent une serrure électronique d'allumage (106) du véhicule, une commande de transmission (101; 201) du véhicule, un appareil de commande (108) du réseau de bord du véhicule et/ou un système (124; 220) de régulation de la vitesse du véhicule.

15. Système de commande selon l'une des revendications 8 à 14, **caractérisé en ce que** le premier bus de données (2a-2f) et le deuxième bus de données (10) présentent chacun un bus CAN.

## Revendications (Revendications pour l'(les) Etat(s) contractant(s) suivant(s): DE)

1. Procédé de transfert de données entre des ensembles de commande d'un véhicule, le véhicule comportant au moins un premier ensemble de commande (101-222) et plusieurs deuxièmes dispositifs de commande (6-9),
le ou les premiers ensembles de commande (101-222) étant raccordés à un premier bus de données (2a-2f) du véhicule et les différents deuxièmes ensembles de commande (6-9) étant reliés à un deuxième bus de données (10) du véhicule,
des données qui doivent être transférées entre deux ensembles de commande (6-9) des deuxièmes ensembles de commande (6-9) étant transférées sur le deuxième bus de données (10) du véhicule et
le premier bus de données (2a-2f) étant séparé du deuxième bus de données (10),
les transferts de données entre deux ensembles de commande (6-9) des deuxièmes ensembles de commande (6-9) s'effectuant sur le deuxième bus de données (10) indépendamment du premier bus de données (2a-2f),
les différents deuxièmes ensembles de commande (6-9) étant reliés au premier bus de données (2a-2f) et
des données qui doivent être transférées entre le ou les premiers ensembles de commande (101-222) et un ensemble de commande (6-9) des deuxièmes ensembles de commande (6-9) étant transmises par l'intermédiaire du premier bus de données (2a-2f) du véhicule,
**caractérisé en ce que**
les différents deuxièmes dispositifs de commande (6-9) comprennent un système (7) de gestion de batteries du véhicule.

2. Procédé selon la revendication 1, **caractérisé en ce que** le véhicule comporte pour l'entraînement du véhicule un moteur à combustion interne et un moteur électrique, les différents deuxièmes ensembles de commande (6-9) comprenant des ensembles de commande (6-9) qui commandent le moteur électrique et les composants associés au moteur électrique.

3. Procédé selon la revendication 1 ou la revendication 2, **caractérisé en ce que** les différents deuxièmes ensembles de commande (6-9) comportent un redresseur (8) d'impulsions du véhicule, un appareil (6) de commande du moteur du véhicule et/ou un entraînement à broche (9) du véhicule.

4. Procédé selon l'une des revendications précédentes, **caractérisé en ce que** le mode de fonctionnement du ou des premiers ensembles de commande (101-222) ou des différents deuxièmes ensembles de commande (6-9) est vérifié au moyen d'un ensemble de diagnostic raccordé à une borne de diagnostic (11) du premier bus de données (2a-2f).

5. Procédé selon l'une des revendications précédentes, **caractérisé en ce que** le premier bus de données (2a-2f) comporte plusieurs sections (2a-2f) de bus de données et un moyen de commutation (3, 4) qui permet de relier et de séparer sélectivement les différentes sections (2a-2f) de bus de données, et **en ce qu'**en cas de perturbation du transfert de données sur l'une des différentes sections (2a-2f) de bus de données, la section (2a-2f) perturbée du bus de données est séparée au moyen des moyens de commutation (3, 4) des autres sections (2a-2f) du bus de données.

6. Procédé selon la revendication 5, **caractérisé en ce que** l'une (2f) des différentes sections (2a-2f) de bus de données est reliée à des ensembles de commande (122-125) du véhicule qui sont disposés dans une partie du véhicule susceptible d'être mise en danger en cas d'accident ou à l'extérieur du véhicule.

7. Procédé selon l'une des revendications précédentes, **caractérisé en ce que** le ou les premiers ensembles de commande (101-222) comportent une serrure électronique d'allumage (106) du véhicule, une commande de transmission (101; 201) du véhicule, un appareil de commande (108) du réseau de bord du véhicule et/ou un système (124; 220) de régulation de la vitesse du véhicule.

8. Système de commande pour véhicule, comprenant :
un premier bus de données (2a-2f) qui transfère des données entre des ensembles de commande, au moins un premier ensemble de commande (101-222) raccordé au premier bus de données (2a-2f),
un deuxième bus de données (10) qui transfère des données entre des ensembles de commande, plusieurs deuxièmes ensembles de commande (6, 9) raccordés au deuxième bus de données (10),
les deuxièmes ensembles de commande (6-9) étant configurés de telle sorte que des données qui doivent être transmises entre deux ensembles de commande (6-9) des deuxièmes ensembles de commande (6-9) sont transférées sur le deuxième bus de données (10),
le premier bus de données (2a-2f) étant séparé du deuxième bus de données (10),
les transferts de données entre deux ensembles de commande (6-9) des deuxièmes ensembles de commande (6-9) s'effectuant sur le deuxième bus de données (10) indépendamment du premier bus de données (2a-2f),
les différents deuxièmes ensembles de commande (6-9) étant reliés au premier bus de données (2a-2f) et
les deuxièmes ensembles de commande (6-9) étant configurés de telle sorte que des données qui doivent être transférées entre le ou les premiers ensembles de commande (101-222) et un ensemble de commande (6-9) des deuxièmes ensembles de commande (6-9) étant transmises par l'intermédiaire du premier bus de données (2a-2f) du véhicule,
**caractérisé en ce que**
les différents deuxièmes dispositifs de commande (6-9) comprennent un système (7) de gestion de batteries du véhicule.

9. Système de commande selon la revendication 8, **caractérisé en ce que** le véhicule comporte pour l'entraînement du véhicule un moteur à combustion interne et un moteur électrique, les différents deuxièmes ensembles de commande (6-9) comprenant des ensembles de commande (6-9) qui commandent le moteur électrique et les composants associés au moteur électrique.

10. Système de commande selon la revendication 8 ou la revendication 9, **caractérisé en ce que** les différents deuxièmes ensembles de commande (6-9) comportent un redresseur (8) d'impulsions du véhicule, un appareil (6) de commande du moteur du véhicule et/ou un entraînement à broche (9) du véhicule.

11. Système de commande selon l'une des revendications 8 à 10, **caractérisé en ce que** le premier bus de données (2a-2f) comporte une borne de diagnostic (11) qui permet de vérifier le mode de fonctionnement du ou des premiers ensembles de commande (101-222) et des différents deuxièmes ensembles de commande (6-9) au moyen d'un ensemble de diagnostic raccordé à la borne de diagnostic (11).

12. Système de commande selon l'une des revendications 8 à 11, **caractérisé en ce que** le premier bus de données (2a-2f) comporte plusieurs sections (2a-2f) de bus de données et un moyen de commutation (3; 4) qui permet de relier et de séparer sélectivement les différentes sections (2a-2f) de bus de données, et **en ce qu'**en cas de perturbation du transfert de données sur l'une des différentes sections (2a-2f) de bus de données, la section (2a-2f) perturbée du bus de données est séparée au moyen des moyens de commutation (3; 4) des autres sections (2a-2f) du bus de données.

13. Système de commande selon la revendication 12, **caractérisé en ce que** l'une (2f) des différentes sections (2a-2f) de bus de données est reliée à des ensembles de commande (122-125) du véhicule qui sont disposés dans une partie du véhicule susceptible d'être mise en danger en cas d'accident ou à l'extérieur du véhicule.

14. Système de commande selon l'une des revendications 8 à 13, **caractérisé en ce que** le ou les premiers ensembles de commande (101-222) comportent une serrure électronique d'allumage (106) du véhicule, une commande de transmission (101; 201) du véhicule, un appareil de commande (108) du réseau de bord du véhicule et/ou un système (124; 220) de régulation de la vitesse du véhicule.

15. Système de commande selon l'une des revendications 8 à 14, **caractérisé en ce que** le premier bus de données (2a-2f) et le deuxième bus de données (10) présentent chacun un bus CAN.
